# EUROPEAN PATENT SPECIFICATION

(11) **EP 4 481 867 B1**
(45) Date of publication and mention of the grant of the patent: **17.06.2026**
(21) Application number: 22949863.9
(22) Date of filing: 08.07.2022
(51) Int. Cl.: H01M 10/04, H01M 6/42, H01M 10/613, H01M 50/209, H01M 50/264

(54) **BATTERY MODULE STACKING DEVICE, METHOD AND BATTERY PRODUCTION SYSTEM**
BATTERIEMODULSTAPELVORRICHTUNG, VERFAHREN UND BATTERIEHERSTELLUNGSSYSTEM
DISPOSITIF D'EMPILEMENT DE MODULES DE BATTERIE, PROCÉDÉ ET SYSTÈME DE PRODUCTION DE BATTERIE

(43) Date of publication of application: 25.12.2024
(73) Proprietor: Contemporary Amperex Technology (Hong Kong) Limited, Hong Kong (HK)
(72) Inventor: YANG, Chenghua, Ningde, Fujian 352100 (CN); ZHANG, Chengmei, Ningde, Fujian 352100 (CN); NI, Dawei, Ningde, Fujian 352100 (CN)
(74) Representative: Gong, Jinping
(86) International application number: PCT/CN2022/104523
(87) International publication number: WO 2024/007279

(56) References cited:
- WO-A1-2020/209502
- CN-A- 111 477 970
- CN-A- 112 038 681
- CN-A- 114 212 519
- CN-A- 114 212 519
- CN-U- 208 690 407
- CN-U- 208 690 407
- CN-U- 214 898 533
- CN-U- 214 898 533
- CN-U- 215 070 077

## Description

### Technical Field

The present application relates to the technical field of battery production, and in particular to a battery module stacking device and method, and a battery production system.

### Background

Due to the advantages such as high energy density, high power density, many cycles of use, and long storage time, batteries such as lithium-ion batteries have been widely used in electric vehicles.

Currently, the formation of multiple battery cells into modules in batteries mainly relies on manual stacking. However, the stacking efficiency is low.

CN208690407 describes a battery stacking tooling in the technical field of automatic production of power batteries. CN214898533 illustrates a cell stacking device and a battery production equipment in the technical field of battery production.

### Summary of the Invention

An objective of the present application is to improve the stacking efficiency of a battery module.

According to a first aspect of the present application, a battery module stacking device is provided, in which a battery module includes a plurality of battery cell modules arranged side by side in a first direction, the battery module stacking device including:
a holder;
a stacking platform movably arranged at the holder in the first direction; and
a clamping device arranged at the holder and configured to clamp the battery cell modules to be stacked and to place the battery cell modules on the stacking platform from above the stacking platform.

The clamping device includes:
two third clamping portions configured to clamp the battery cell modules to be stacked, and to have an adjustable distance in a second direction, the second direction being perpendicular to the first direction; and
a negative pressure suction member arranged between the two third clamping portions and configured to suction a top surface of each of the battery cell modules from a top of the battery cell module.

The battery module stacking device of this embodiment can realize automatic stacking through the movement cooperation between the clamping device and the stacking platform, and thus can improve the stacking efficiency of the battery module, thereby improving the production efficiency of batteries, and reducing labor costs and labor intensity; and by using the clamping device to place the battery cell modules, the positioning accuracy between adjacent battery cell modules can be improved, thereby ensuring the stacking quality of the battery module. In addition, by moving the stacking platform in the first direction, the clamping device can place the battery cell modules on the stacking platform at a safe distance, so that it is possible to prevent damage to the battery cell modules and to help ensure the alignment of adjacent battery cell modules. Additionally, by making the distance between the two third clamping portions adjustable in the second direction, it is possible to flexibly clamp or release the battery cell module, and adapt to battery cell modules with different sizes in the second direction. Moreover, by providing the negative pressure suction member for suctioning the battery cell module, the negative pressure suction member can jointly withstand the weight of the battery cell module with the third clamping portions during the transfer of the battery cell module, and can prevent the occurrence of positional displacement of the battery cell module relative to the third clamping portions, so that it is possible to improve the stable transfer of the battery cell module and ensure the relative position accuracy with respect to the clamping device during the transfer, thereby improving the stacking accuracy of the battery cell modules.

In some embodiments, the stacking platform is configured to be in an initial position when placing the lowest layer of battery cell module, and to move downward by a preset distance relative to the position where the (i-1)-th layer of battery cell module is placed when placing the i-th layer of battery cell module from the lowest layer, and the preset distance is the thickness of the battery cell module in the first direction, where i = 2, 3, 4....

In this embodiment, the battery cell modules are placed by lowering the stacking platform layer by layer, so that all the battery cell modules can be placed on the stacking platform at the same distance, and the automated stacking process of the battery module is made safe and reliable, improving the stacking accuracy, and reducing the safety risk during stacking.

In some embodiments, the initial position is configured such that a bottom of the battery cell module is in contact with a top surface of the stacking platform.

In this embodiment, the battery cell module can directly fall onto the stacking platform when the clamping device is released, eliminating the need to rely on gravity to fall to the stacking platform. It is possible to prevent damage to the battery cell modules to be stacked that fall to the stacking platform due to gravity, and also to prevent the impact of a falling battery cell module from damaging the stacking platform or the adjacent lower layer of battery cell module, and the position accuracy of the battery cell modules placed on the stacking platform can be improved. For example, the battery cell modules each include a heat dissipation member and a battery cell arranged at the heat dissipation member. In this way, it is possible to avoid positional displacement between the heat dissipation member and the battery cell when placing the battery cell module.

In some embodiments, the battery module stacking device further includes a displacement measurement component configured to measure a movement distance of the stacking platform in the first direction.

In this embodiment, by using the displacement measurement component to measure the movement distance of the stacking platform, the position of the stacking platform can be accurately controlled to realize the layer-by-layer stacking of battery module, so that it is possible to ensure the smooth stacking of each battery cell module, and improve the stacking safety of the battery cell modules.

In some embodiments, the stacking platform includes:
a connecting portion; and
a plurality of first protrusions provided at intervals in a second direction above the connecting portion, wherein a first groove is formed between two adjacent first protrusions for removal of the battery module, the plurality of first protrusions are configured to jointly carry the battery cell modules, and the second direction is perpendicular to the first direction.

In this embodiment, by providing a stacking platform with a plurality of first protrusions, the battery module can be easily removed as a whole after the stacking of the battery module is completed, thereby improving the assembly convenience. Furthermore, the plurality of first protrusions are arranged to carry the battery cell modules, so that the accuracy of the carrying surface can be improved during processing compared with the monolithic carrying surface, the battery cell modules can be placed stably on the stacking platform to prevent shaking, and the stacking accuracy of the battery module can be improved.

In some embodiments, the battery module stacking device further includes the battery cell modules to be stacked, wherein the battery cell modules each includes: a heat dissipation member and a battery cell arranged at the heat dissipation member.

In this embodiment, by providing a heat dissipation member correspondingly for each battery cell in the battery module, the heat dissipation effect of the battery module can be improved and the operation performance and fast charging capability of the battery can be improved. Since adjacent heat dissipation members need to be mounted through positioning or snap-fit structures during the stacking, the battery module stacking device of the present application has a high stacking accuracy and can meet the stacking requirements of the battery module with heat dissipation members.

In some embodiments, the stacking platform includes: a first limiting portion configured to limit movement of the battery cell modules in a second direction, the second direction being perpendicular to the first direction and being the same as a length direction of the battery cell modules; and/or a second limiting portion configured to limit movement of the battery cell modules in a third direction, the third direction being perpendicular to the first direction and being the same as a width direction of the battery cell modules.

In this embodiment, by providing the first limiting portion and/or the second limiting portion, the lowest layer of battery cell module can be positioned, so that it is possible to not only improve the positioning accuracy, but also to improve the placement stability of the lowest layer of battery cell module on the stacking platform, facilitating the stable stacking of an upper layer of battery cell module.

In some embodiments, the battery cell modules each include a heat dissipation member and a battery cell arranged at the heat dissipation member, the heat dissipation member of the lowest layer of battery cell module includes an accommodating shell, a plurality of second protrusions are provided on a side of the accommodating shell away from the battery cell, which are provided at intervals in the length direction of the battery cell module, and some of the second protrusions are provided with second grooves;
wherein the first limiting portion is configured to cooperate with the second groove to limit the movement of the battery cell module in the second direction; and/or the second limiting portion is configured to limit an end of each of the second protrusions in the third direction to limit the movement of the battery cell module in the third direction.

In this embodiment, through the structural cooperation between the stacking platform and the heat dissipation member of the lowest layer of battery cell module, the positioning of the battery cell module is realized, so that it is possible to reliably prevent the bottom layer of battery cell module from being displaced relative to the stacking platform to achieve high-accuracy positioning.

In some embodiments, the battery module stacking device further includes: a positioning platform configured to position the battery cell modules to be stacked; wherein the clamping device is movably arranged and configured to obtain the battery cell modules from the positioning platform and place the battery cell modules on the stacking platform.

In this embodiment, by providing the positioning platform, the battery cell modules to be stacked can be placed on the positioning platform in advance, so that it is possible to increase the degree of automation of stacking of the battery module. Moreover, after completing the stacking of a battery cell module, the clamping device can obtain the next battery cell module directly from the positioning platform, thereby saving the waiting time, so that it is possible to improve the continuity of the stacking process of the battery module and improve the stacking efficiency. In addition, the positioning platform can accurately position the battery cell module, ensuring the consistency of the position where the clamping device clamps the battery cell module every time, so that it is possible to improve the stacking accuracy of the battery module.

In some embodiments, the positioning platform is located on a side surface of the stacking platform in a second direction, and the clamping device is movably arranged in the first direction and/or the second direction, the second direction being perpendicular to the first direction.

In this embodiment, the clamping device is movably arranged in the first direction and/or the second direction, so that the clamping device can flexibly obtain the battery cell module from the positioning platform and place it on the stacking platform, and the degree of automation of stacking of the battery module can be increased.

In some embodiments, the positioning platform includes:
a carrying platform configured to carry the battery cell modules; and
two first clamping portions configured for clamping and positioning from two sides of the battery cell modules in the second direction, and to have an adjustable distance in the second direction, the second direction being perpendicular to the first direction.

In this embodiment, by making the distance between the two first clamping portions adjustable in the second direction, the battery cell modules can be accurately positioned in the second direction and the positioning accuracy of the battery cell modules placed on the carrying platform can be improved.

In some embodiments, the positioning platform further includes:
a carrying platform configured to carry the battery cell modules;
a first positioning portion arranged on the carrying platform and configured to position a side surface of each battery cell module that is perpendicular to a third direction and away from an electrode lead-out portion; and
a second positioning portion arranged on the carrying platform and configured to position a side surface of the battery cell module that is perpendicular to the third direction and away from the electrode lead-out portion;
wherein the third direction is perpendicular to the first direction.

In this embodiment, by providing the first positioning portion and the second positioning portion, the battery cell modules can be accurately positioned in the third direction, further improving the positioning accuracy of the battery cell modules placed on the carrying platform.

In some embodiments, the battery cell modules each include a battery cell, the second positioning portion includes two movable blocks, and the two movable blocks are movably arranged in the third direction, and are configured to respectively position the battery cell in the third direction.

In this embodiment, by providing two movable blocks, the side surface of the battery cell module that is perpendicular to the third direction and away from the electrode lead-out portion can be positioned, so that it is possible to not only adapt to battery cell modules with different sizes in the third direction, but also to apply an appropriate pre-tightening force to the battery cell modules in the third direction by the second positioning portion during positioning, thereby ensuring the positioning accuracy while preventing damage to the battery cell modules. Moreover, the second positioning portion can also be easily released when the clamping device obtains the battery cell module.

In some embodiments, the battery module stacking device further includes: a positioning mechanism located between the clamping device and the stacking platforms in the first direction and configured to position the battery cell module currently located on the top layer.

In this embodiment, by providing the positioning mechanism, the battery cell module currently on the top layer can be positioned to prevent shaking when stacking an upper layer of battery cell module, so that it is possible to improve the stacking accuracy, and meet the requirements for high-accuracy stacking.

In some embodiments, the positioning mechanism includes:
two second clamping portions configured to clamp and position two sides of the battery cell module currently located on the topmost layer in a second direction, wherein a distance between the two second clamping portions is adjustable in the second direction, and the second direction is perpendicular to the first direction.

In this embodiment, by making the distance between the two second clamping portions adjustable in the second direction, it is possible to flexibly activate or deactivate the positioning of the battery cell module currently located on the top layer, and to accurately position the battery cell module in the second direction. The application of an appropriate clamping force can also prevent damage to the battery cell module. Moreover, such a positioning mechanism can also be suitable for positioning battery cell modules with different sizes in the second direction.

In some embodiments, the battery cell modules each include a battery cell, and the positioning mechanism further includes:
two third positioning portions respectively connected to respective ends of the two second clamping portions in a third direction, the third direction being perpendicular to the first direction and the second direction, wherein the third positioning portions are movably arranged in the third direction, and the third positioning portions are configured to position an electrode lead-out portion of the battery cell in the third direction.

In this embodiment, by providing a third positioning portion that is movable in the third direction, the side surface of the battery cell module that is perpendicular to the third direction and away from the electrode lead-out portion can be positioned, so that it is possible to not only adapt to battery cell modules with different sizes in the third direction, but also to apply an appropriate pre-tightening force to the battery cell modules in the third direction by the third positioning portion during positioning, thereby ensuring the positioning accuracy while preventing damage to the battery cell modules. Moreover, the third positioning portion can also be easily released when the clamping device obtains the battery cell module.

In some embodiments, the clamping device includes:

In some embodiments, the battery cell modules each include a heat dissipation member and a battery cell arranged at the heat dissipation member, and the clamping device further includes:
a pressure applying member arranged between the two third clamping portions and configured to apply a pressing force to a top surface of the battery cell.

In this embodiment, considering that the top surface of the battery cell in the battery cell module is exposed, when the negative pressure suction member suctions the top surface of the battery cell, it is likely to suck the battery cell out of the heat dissipation member. Before suction, the battery cell is compressed by the pressure applying member, so that it is possible to prevent the occurrence of positional displacement or disengagement of the battery cell relative to the heat dissipation member.

In some embodiments, a preset angle is formed between a carrying surface of the stacking platform and a horizontal plane.

In this embodiment, by obliquely arranging the carrying surface of the stacking platform, during the stacking of the battery cell modules, the positioning or cooperation of adjacent battery cell modules can be achieved by means of gravity, and the holder can also be used to support the side surfaces of the plurality of battery cell modules, so that it is possible to prevent tipping when stacking a relatively high battery module and improve the stacking safety.

In some embodiments, the holder includes a mounting portion and a supporting portion, the supporting portion is arranged at a side portion of the mounting portion, the stacking platform is movably mounted to the supporting portion in the first direction, the supporting portion has a supporting surface and is located on a lower side of the stacking platform, and the supporting surface is perpendicular to the carrying surface of the stacking platform.

In some embodiments, when during the stacking of the battery cell modules, the supporting surface can be used to provide support to the side surfaces of the battery cell modules to prevent the battery module from tipping during the stacking; and the supporting surface also forms a stacking reference surface, and the battery cell modules all abut against the supporting surface, facilitating the improvement of the alignment of the battery module in the third direction.

In some embodiments, the battery module stacking device further includes an anti-tip device arranged on the holder, wherein the anti-tip device includes a movable component movable in a second direction, and is configured to maintain a first preset gap with a side surface of each of the battery cell modules perpendicular to the second direction during stacking, and to move away to remove the battery module after all the battery cell modules are stacked.

In this embodiment, by providing the anti-tip device and maintaining the first preset gap with the side surface of the battery cell module perpendicular to the second direction during the stacking, it is possible to not only prevent the plurality of battery cell modules from tipping during the stacking, but also to allow the stacking platform to drive the battery cell modules to move flexibly in the first direction.

In some embodiments, the anti-tip device further includes:
a mounting member arranged on an outer side of the movable component in the second direction; and
a first driving component arranged on a side of the mounting member away from the movable component, and configured to drive the movable component to move relative to the mounting member in the second direction.

In this embodiment, the first driving component drives the movable component to move in the second direction, and the gap with the side surface of the battery cell module can be flexibly adjusted, so that it is possible to not only prevent the plurality of battery cell modules from tipping during the stacking, but also to allow the stacking platform to drive the battery cell modules to move flexibly in the first direction. After the stacking is completed, the movable component can also be moved away to easily remove the battery module.

In some embodiments, the movable component is movable in a third direction and is configured to maintain a second preset gap with an outer side surface of the battery cell module perpendicular to the third direction during the stacking, and to move away to take out the battery module after all the battery cell modules are stacked.

The anti-tip device of this embodiment can maintain the second preset gap with the outer side surface of the battery cell module perpendicular to the third direction during the stacking, so that it is possible to not only prevent the plurality of battery cell modules from tipping during the stacking, but also to allow the stacking platform to drive the battery cell modules to move flexibly in the first direction.

In some embodiments, the anti-tip device further includes:
a mounting member arranged on an outer side of the movable component in the second direction; and
a second driving component fixedly mounted to the holder and configured to drive the mounting member and the movable component to move in the third direction.

In this embodiment, the second driving component drives the movable component to move in the third direction, and the gap with the side surface of the battery cell module where the electrode lead-out portion is located can be flexibly adjusted, so that it is possible to not only prevent the plurality of battery cell modules from tipping during the stacking, but also to allow the stacking platform to drive the battery cell modules to move flexibly in the first direction. After the stacking is completed, the movable component can also be moved away to easily remove the battery module.

According to a second aspect of the present application, a battery production system is provided, including a battery module stacking device of the above embodiments.

According to a third aspect of the present application, a battery module stacking method is provided, in which a battery module includes a plurality of battery cell modules arranged side by side in a first direction, the battery module stacking method including:
clamping, by a clamping device arranged at a holder, the battery cell modules to be stacked;
moving a stacking platform arranged at the holder to a proper position in the first direction; and
causing the clamping device to place the battery cell modules on the stacking platform from above the stacking platform.

In some embodiments, the battery module stacking method further includes:
bringing the stacking platform into an initial position when placing the lowest layer of battery cell module; and
moving the stacking platform downward by a preset distance relative to the position where the (i-1)-th layer of battery cell module is placed when placing the i-th layer of battery cell module from the lowest layer, wherein the preset distance is the thickness of the battery cell module in the first direction; and i = 2, 3, 4....

In some embodiments, the battery cell modules each include a heat dissipation member and a battery cell arranged at the heat dissipation member; and during stacking of adjacent battery cell modules, the respective heat dissipation members of the adjacent battery cell modules cooperate with each other.

In some embodiments, the battery module stacking method further includes:
before clamping the battery cell modules by the clamping device, placing the battery cell modules to be stacked on a positioning platform;
positioning the battery cell modules by the positioning platform; and
moving the clamping device to above the positioning platform, and obtaining the battery cell modules from the positioning platform.

In some embodiments, the battery module stacking method further includes:
before placing the i-th layer of battery cell module from the lowest layer on the stacking platform, positioning, by a positioning mechanism arranged at the holder, the (i-1)-th layer of battery cell module, where i = 2, 3, 4...; and
after the i-th layer of battery cell module is placed on the stacking platform, separating the positioning mechanism from the (i-1)-th layer of battery cell module.

### Description of Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is an exploded view of a battery according to some embodiments of the present application.
Fig. 2 is a schematic structural diagram of a battery module according to some embodiments of the present application.
Fig. 3 is an enlarged view of part A of Fig. 2.
Fig. 4 is a schematic structural diagram of a plurality of heat dissipation members in a stack when viewed from one perspective.
Fig. 5 is a schematic structural diagram of the plurality of heat dissipation members in a stack when viewed from another perspective.
Fig. 6 is a schematic structural diagram of a heat dissipation member when viewed from one perspective.
Fig. 7 is a schematic structural diagram of the heat dissipation member when viewed from another perspective.
Fig. 8 is a perspective view of a battery module stacking device according to some embodiments of the present application.
Fig. 9 is a schematic structural diagram of the battery module stacking device according to the present application with some components removed.
Fig. 10 is a side view of a battery module stacking device according to some embodiments of the present application.
Fig. 11 is a schematic diagram of a battery module stacking device according to the present application with the battery module stacking being completed.
Fig. 12 is a perspective view of a holder of a battery module stacking device according to some embodiments of the present application.
Fig. 13 is a side view of the holder.
Fig. 14 is a rear view of the holder.
Fig. 15 is an enlarged view of part B of Fig. 12.
Fig. 16 is a schematic structural diagram of a positioning platform in a battery module stacking device according to the present application for positioning battery cell modules to be stacked.
Fig. 17 is a perspective view of a positioning platform according to some embodiments of the present application.
Fig. 18 is a side view of a positioning platform according to some embodiments of the present application.
Fig. 19 is an enlarged view of part C in Fig. 8.
Fig. 20 is a perspective view of a positioning mechanism of a battery module stacking device according to some embodiments of the present application.
Fig. 21 is a perspective view of a clamping device of a battery module stacking device according to some embodiments of the present application.
Fig. 22 is a top view of a clamping device according to some embodiments of the present application.
Fig. 23 is a perspective view of an anti-tip device of a battery module stacking device according to some embodiments of the present application.
Fig. 24 is a side view of the anti-tip device.

In the accompanying drawings, the figures are not necessarily drawn to scale.

### List of reference signs:

300, battery; 301, box assembly; 301A, box; 301B, cover;
200, battery module; 200', battery cell module; 201, heat dissipation member; 2011, accommodating shell; 2012, second protrusion; 2013, second groove; 2014, protruding portion; 2015, protective portion; 2015A, main body section; 2015B, extension section; 2016, guide groove body; 2017, heat dissipation rib; 202, battery cell; 2021, housing; 2022, electrode lead-out portion; 2023, pressure relief component;
100, battery module stacking device; z, first direction; x, second direction; y, third direction;
1. holder; 11, mounting portion; 111, bottom plate; 112, side plate; 113, front plate; 1131, through slot; 114, extension plate; 12, supporting portion; 121, supporting surface; 13, nut; 14. third driving component; 15, coupling; 16, first bearing seat; 17, lead screw; 18, first guide rail; 19, first slide block;
2, stacking platform; 21, connecting portion; 22, first protrusion; 221, first limiting portion; 222, second limiting portion; 223, first portion; 224, second portion; 225, first groove;
3, clamping device; 31, fourth driving component; 32, fifth driving component; 33, transmission mechanism; 34, third clamping portion; 35, negative pressure suction member; 36, pressure applying member; 361, pressure applying portion, 362, connecting rod; 37, elastic element; 38, second mounting block; 39, tenth driving component;
4, positioning platform; 41, carrying platform; 411, supporting plate; 412, reinforcement plate; 413, third protrusion; 42, first clamping portion; 43, first positioning portion; 44, second positioning portion; 441, movable block; 442, first connector; 443, seventh driving component; 45, connecting block; 46, sixth driving component;
5, positioning mechanism; 51, second clamping portion; 511, clamping arm; 511A, first arm; 511B, second arm; 512, first pad; 52, third positioning portion; 521, positioning main body; 521A, first portion; 521B, second portion; 521C, third portion; 522, second pad; 53, eighth driving component; 54, first mounting block; 55, ninth driving component;
6, anti-tip device; 60, blocking member; 61, movable component; 611,main body portion; 612, pad; 62, mounting member; 621, first plate; 622, second plate; 623, extension block; 63, first driving component; 64, second driving component; 641, mounting seat; 65, second connector; 66, linear bearing; 67, first limiting member; 67', second limiting member; 68, second slide block; 68', second guide rail; 69, third limiting member; 69', fourth limiting member;
7, displacement measurement component; 8, drag chain.

### Detailed Description

Implementations of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the embodiments of the present application, the term "plurality of" refers to at least two (including two); similarly, "plurality of groups" refers to at least two (including two) groups, and "plurality of pieces" refers to at least two (including two) pieces.

In the present application, the orientations or positional relationships indicated by the terms "upper", "lower", "top", "bottom", "front", "rear", "inner", "outer", etc. are described here merely for convenient description of the present application, rather than indicating or implying that an apparatus referred to needs to have a particular orientation or be constructed and operated in a particular orientation, and therefore cannot be construed as limiting the scope of protection of the present application.

In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of error. Orientation words appearing in the following description are all directions shown in the drawings, and do not limit the specific structure of the present application.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Reference herein to "an embodiment" means that a particular feature, structure, or characteristic described in connection with the embodiment can be included in at least some embodiments of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

The battery unit may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery unit may be cylindrical, flat, cuboid or in another shape, which will not be limited by the embodiments of the present application. The battery units are generally classified into three types depending on the way of package: cylindrical battery units, prismatic battery units and pouch battery units, which are also not limited in the embodiments of the present application.

Current battery units generally include a housing and an electrode assembly accommodated in the housing, and the housing is filled with an electrolyte. The electrode assembly is mainly formed by stacking or winding a first electrode plate and a second electrode plate with opposite polarities, and a separator is generally provided between the first electrode plate and the second electrode plate. Coated parts of the first electrode plate and the second electrode plate constitute a main body portion of the electrode assembly, and uncoated parts of the first electrode plate and the second electrode plate respectively constitute a first tab and a second tab. In a lithium-ion battery, the first electrode plate may be a positive electrode plate, including a positive electrode current collector and positive electrode coating layers provided on two sides of the positive electrode current collector. The material of the positive electrode current collector may be, for example, aluminum, and the positive electrode coating may be, for example, lithium cobalt oxide, lithium iron phosphate, ternary lithium or lithium manganate. The second electrode plate may be a negative electrode plate, including a negative electrode current collector and negative electrode coating layers provided on two sides of the negative electrode current collector. The material of the negative electrode current collector may be, for example, copper, and the negative electrode coating may be, for example, graphite or silicon. The first tab and the second tab may be located at one end of the main body portion together or at two ends of the main body portion respectively. During the charging or discharging process of the battery unit, the positive electrode coating and the negative electrode coating react with an electrolytic solution, and the tabs are connected to electrode lead-out portions to form a current loop.

For the current batteries, the stacking for forming battery modules mainly relies on manual stacking, resulting in low production efficiency and high labor costs. Moreover, the inventors have found during the assembly process that it is difficult to ensure the positioning accuracy of multiple battery units using the manual stacking, which brings great difficulties to the subsequent alignment of multiple battery units.

Moreover, taking an electric vehicle as an example, there are currently higher requirements for operation performance, capacity and fast charging of the battery, which requires improving the heat dissipation performance of the battery. However, the traditional approach in which a cooling plate is provided only at the bottom or top of the battery module or between adjacent battery modules is no longer able to meet the heat dissipation requirements.

In order to further improve the overall heat dissipation performance of the battery, the inventors have thought of adding heat dissipation members to each group of adjacent battery units in the battery module. However, manual stacking will further affect the production efficiency of the battery module; moreover, positioning coordination is required for adjacent heat dissipation members of such a battery module, so higher positioning accuracy is required during stacking. However, the current manual stacking is difficult to meet the positioning requirements.

In order to solve this problem, the inventors have proposed an automated battery module stacking device to meet the stacking requirements of a battery module in which a heat dissipation member is provided between adjacent battery units. The stacking device may also be applied to a battery module in which no heat dissipation member is provided between adjacent battery units. In some embodiments, the battery module includes a plurality of battery cell modules arranged side by side in a first direction, and the battery module stacking device includes: a holder; a stacking platform movably arranged at the holder in the first direction; and a clamping device arranged at the holder and configured to clamp the battery cell modules to be stacked and to place the battery cell modules on the stacking platform from above the stacking platform.

Such a battery module stacking device can not only improve the stacking efficiency and reduce labor costs, but can also improve the positioning accuracy between adjacent battery cell modules, thereby ensuring the stacking quality of the battery module.

In order to more clearly understand the stacking principle of the battery module of the present application, the structure of the battery module will be first described below.

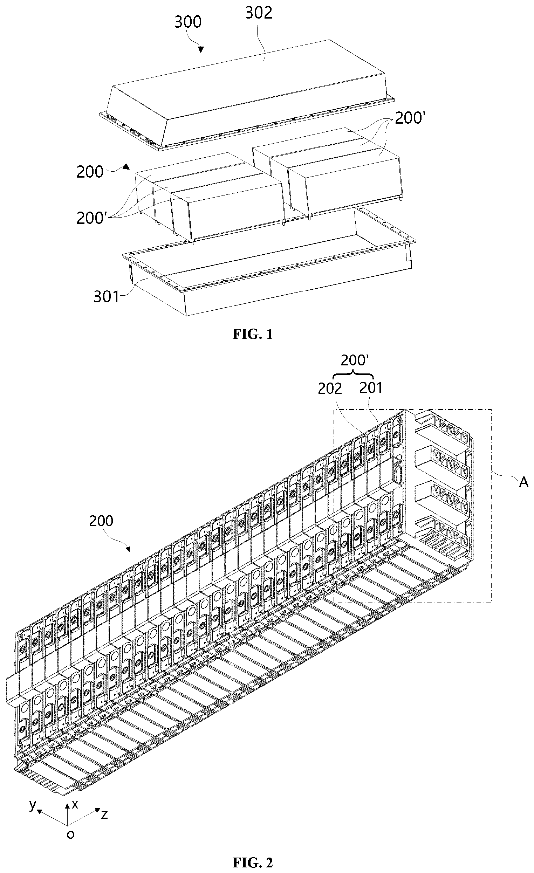

As shown in Fig. 1, the battery 300 may include a battery module 200. The battery module 200 is arranged in a box assembly 301. There may be one or more battery modules 200.

The battery 300 may further include the box assembly 301. The box assembly 301 is hollow inside and used to accommodate one or more battery modules 200. According to the shape, quantity, combination and other requirements of the battery modules 200 accommodated, the box assembly 301 may also have different shapes and sizes. For example, the box assembly 301 may include: a box 301A and a cover 301B. One end of the box 301A has an opening, and the cover 301B is used to close the opening of the box 301A. For example, according to the arrangement of the battery modules 200, the box 301A is in the shape of a cuboid.

Optionally, the battery module 200 may also be directly arranged in an accommodating cavity of an electrical device. For example, if the electrical device is an electric vehicle, the accommodating cavity may be a space formed by a vehicle frame, and the battery module 200 is directly mounted in the accommodating cavity.

Fig. 2 is a schematic structural diagram of a battery module 200. The battery module 200 includes a plurality of battery cell modules 200' arranged side by side in a first direction z. The battery cell modules 200' each include a heat dissipation member 201 and a battery cell 202. The battery cell 202 is arranged at the heat dissipation member 201. The battery cell 202 may also be called a battery unit. The respective battery cells 202 of the plurality of battery cell modules 200' may be connected in series or in parallel or in series-parallel. The series-parallel connection means that some of the plurality of battery cells 202 are connected in series and some are connected in parallel. For example, the heat dissipation member 201 may be a passive heat dissipation member or an active heat dissipation member. The passive heat dissipation member can be an air-cooling member that uses air flow to achieve natural heat dissipation. The active heat dissipation member may allow a cooling medium such as liquid and gas to pass through for cooling.

The heat dissipation member 201 in the battery cell module 200' located at a first end of the battery module 200 in the first direction z also serves as an end plate. Another heat dissipation member 201 may be additionally provided on an outer side of the battery cell module 200' located at a second end of the battery module 200 in the first direction z, and also serves as an end plate. The structure of the heat dissipation member 201 serving as the end plate may be different from other heat dissipation members 201, for example, having a thickened structure or being provided with other structures for facilitating the stacking, mounting or transfer of the battery module 200; or all the heat dissipation members 201 in the battery module 200 are of the same structure.

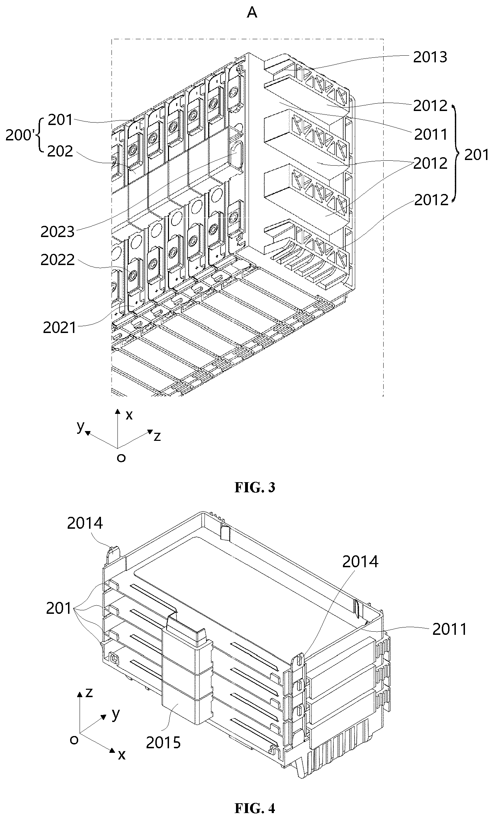

As shown in Fig. 3, the battery cell 202 includes a housing 2021 and an electrode assembly. The electrode assembly is arranged in the housing 2021. Two electrode lead-out portions 2022 with opposite polarities and a pressure relief component 2023 may be provided on the housing 2021. For example, the housing 2021 includes an accommodating portion and an end cover. The accommodating portion has an opening. The end cover is used to close the opening. The electrode lead-out portions 2022 and the pressure relief component 2023 are both provided on the end cover. The pressure relief component 2023 may be located between the two electrode lead-out portions 2022. The thickness direction of the battery cell 202 is consistent with the first direction z, and the plurality of battery cell modules 200' are stacked in the thickness direction of the battery cell 202.

The electrode lead-out portions 2022 are used to output or input electric energy to the battery cell 202. The electrode lead-out portions 2022 may be electrode terminals, such as terminal posts, and their cross-sectional areas may be circular, rectangular, etc.

The pressure relief component refers to an element or component that is actuated when an internal pressure or temperature of the battery cell 202 reaches a predetermined threshold so as to release the internal pressure or heat. The threshold design is different according to different design requirements. The threshold may depend on the material of one or more of the positive electrode plate, the negative electrode plate, the electrolytic solution and the separator in the battery cell 202. The pressure relief component may take the form of an anti-explosion valve, an air valve, a pressure relief valve or a safety valve, etc., and may specifically adopt a pressure-sensitive or temperature-sensitive element or structure. That is, when the internal pressure or temperature of the battery cell 202 reaches a predetermined threshold, the pressure relief component performs an action or a weakened structure provided in the pressure relief component is damaged, so as to form an opening or channel for releasing the internal pressure or heat.

The "actuation" mentioned in the present application means that the pressure relief component acts or is activated to a certain state, such that the internal pressure and heat of the battery cell 202 can be released. The action generated by the pressure relief component may include, but not limited to, at least a part of the pressure relief component being fractured, broken, torn or opened. When the pressure relief component is actuated, the internal emissions of the battery cell 202 will be discharged outward from the actuated position. In this way, the pressure and heat in the battery cell 202 can be released at a controllable pressure or temperature, thereby avoiding potential, more serious accidents. The emissions from the battery cell 202 include, but are not limited to: an electrolytic solution, dissolved or split positive and negative electrode plates, fragments of a separator, high-temperature and high-pressure gas (such as CH4, CO and other combustible gases) generated by reaction, flames, etc.

When such a battery module 200 is mounted in the box assembly 301, the electrode lead-out portions 2022 are arranged facing the cover 301B, and all the battery cells 202 are placed vertically.

As shown in Fig. 3, the heat dissipation member 201, that is, the end plate, of the lowest layer of battery cell module 200' includes: an accommodating shell 2011. The accommodating shell 2011 is used to have the battery cell 202 placed therein. A plurality of second protrusions 2012 are provided at intervals in the second direction x on a side of the accommodating shell 2011 away from the battery cell 202, and some of the second protrusions 2012 are provided with second grooves 2013. The second direction x is perpendicular to the first direction z and is the same as the length direction of the battery cell module 200'. The second protrusion 2012 may be provided with a weight-reducing groove, and may also be used as a heat dissipation rib. For example, four second protrusions 2012 are provided at intervals in the second direction x on the side of the accommodation shell 2011 away from the battery cell 202. Each second protrusion 2012 extends in a third direction y. The third direction y is perpendicular to the first direction z and the second direction x. An end of each of the outermost two second protrusions 2012 facing the electrode lead-out portion 2022 is provided with a second groove 2013.

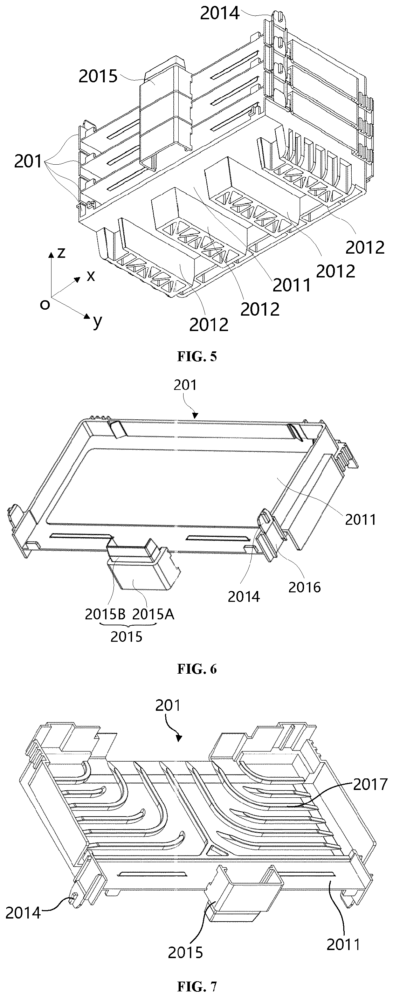

Figs. 4 and 5 illustrate schematic diagrams of a state in which a plurality of heat dissipation members 201 are stacked in the first direction z. The shape of the heat dissipation member 201 is adapted to the battery cell 202 and may be in the form of a cuboid box structure. The heat dissipation member 201 includes an accommodation shell 2011, and the battery cell 202 is arranged in the accommodation shell 2011. During the stacking, the opening of the accommodation shell 2011 faces upward, and a surface of the battery cell 202 is exposed on the top of the battery cell module 200'. Two adjacent heat dissipation members 201 are positioned relative to each other.

Fig. 6 is a schematic structural diagram of a single heat dissipation member 201. The accommodation shell 2011 is a structure formed from a thin plate and may include a bottom wall and side walls connected to the bottom wall. The side walls may be enclosed to form a rectangle, and the sides of the side walls away from the bottom wall form an opening for placing the battery cell 202. The side wall may be provided with a positioning portion. The positioning portion may include a guide groove body 2016 and a protruding portion 2014. The guide groove body 2016 may be provided on an outer surface of the side wall and extend in the first direction z. The protruding portion 2014 may be provided at one end of the guide groove body 2016 and extend beyond the side wall in the first direction z. During the stacking, for adjacent heat dissipation members 201, the protruding portion 2014 of one heat dissipation member 201 is embedded in the guide groove body 2016 of the other heat dissipation member 201. A clearance fit may be formed between the guide groove body 2016 and the protruding portion 2014 for smooth mounting. For example, positioning portions may be provided on two opposite side walls, and the two positioning portions may be respectively provided on the side walls located at two ends in the second direction x.

A side wall of the accommodation shell 2011 facing the electrode lead-out portion 2022 is provided with a protective portion 2015 for protecting the pressure relief component 2023. The protective portion 2015 may be located in a middle region of the side wall in the second direction x. For example, the protective portion 2015 may be of a C-shaped structure. The protective portion 2015 includes a main body section 2015A and an extension section 2015B connected in the first direction z. The outline size of the extension section 2015B is smaller than that of the main body section 2015A. During the stacking, for adjacent heat dissipation members 201, the extension section 2015B of one heat dissipation member 201 is embedded in the main body section 2015A of the other heat dissipation member 201.

Fig. 7 is a schematic structural diagram of the bottom of the heat dissipation member. The surface of the accommodation shell 2011 away from the battery cell 202 is provided with heat dissipation ribs 2017 to enhance the heat dissipation of the battery cell 202.

In some embodiments, the battery module 200 includes a plurality of battery cell modules 200' arranged side by side in the first direction z. The battery module stacking device 100 includes: a holder 1; a stacking platform 2 movably arranged at the holder 1 in the first direction z; and a clamping device 3 arranged at the holder 1 and configured to clamp the battery cell modules 200' to be stacked and to place the battery cell modules 200' on the stacking platform 2 from above the stacking platform 2.

The battery cell module 200' is used as a stack unit. The battery cell module 200' may include a heat dissipation member 201 and a battery cell 202 arranged at the heat dissipation member 201. For convenience of description, the lowest end plate and the lowest layer of battery cell 202 are together used as a battery cell module 200', except that only the structure of the heat dissipation member 201 of the lowest layer of battery cell module 200' is different from that of the heat dissipation member 201 between adjacent battery cells 202. After all the battery cell modules 200' are stacked, a separate heat dissipation member 201 needs to be provided at the top as the topmost end plate. Optionally, the battery cell module 200' only includes a battery cell 202, or the battery cell module 200' includes a battery cell 202 and a structural member.

The holder 1 serves as a main body supporting component of the battery module stacking device 100 and is used to mount various other functional components.

The stacking platform 2 is used to stack the battery cell modules 200' layer by layer. The stacking direction may be any direction, as long as the battery cell modules 200' can be placed stably. In subsequent embodiments, an example in which the stacking direction is a height direction is taken for illustration. The height direction may be the vertical direction, or may be at a preset angle with the vertical direction. The area of the stacking platform 2 only needs to accommodate a single battery cell module 200'. The stacking platform 2 is movably arranged in the first direction z relative to the holder 1, so that there is a safe distance when the clamping device 3 places the battery cell module 200' on the stacking platform 2, so as to facilitate the positioning of the battery cell module 200', and prevent damage to the battery cell module 200'. When the stacking direction is the height direction, the stacking platform 2 is arranged in a liftable manner.

The clamping device 3 is used to clamp the battery cell modules 200' to be stacked, and can clamp one or more battery cell modules 200' at the same time. The clamping device 3 may be fixedly arranged at the holder 1, and the battery cell modules 200' are placed on the clamping device 3 by means of a manipulator or other devices; or the clamping device 3 may be movably arranged at the holder 1, for example, it can realize lateral movement or lifting movement, so as to actively obtain the battery cell modules 200' through movement. The lowest layer of battery cell module 200' is directly placed on the stacking platform 2, and a further layer of battery cell modules 200' is placed on top of the current topmost battery cell module 200', that is, it is indirectly placed on the stacking platform 2 via the battery cell module 200'.

The battery module stacking device 100 of this embodiment can realize automatic stacking through the movement cooperation between the clamping device 3 and the stacking platform 2, and thus can improve the stacking efficiency of the battery module 200, thereby improving the production efficiency of batteries 300, and reducing labor costs and labor intensity; and by using the clamping device 3 to place the battery cell modules 200', the positioning accuracy between adjacent battery cell modules 200' can be improved, thereby ensuring the stacking quality of the battery module 200. In addition, by moving the stacking platform 2 in the first direction z, the clamping device 3 can place the battery cell modules 200' on the stacking platform 2 at a safe distance, so that it is possible to prevent damage to the battery cell modules 200' and to help ensure the alignment of adjacent battery cell modules 200'.

In some embodiments, the stacking platform 2 is configured to be in an initial position when placing the lowest layer of battery cell module 200', and to move downward by a preset distance relative to the position where the (i-1)-th layer of battery cell module 200' is placed when placing the i-th layer of battery cell module 200' from the lowest layer, and the preset distance is the thickness of the battery cell module 200' in the first direction z, where i = 2, 3, 4....

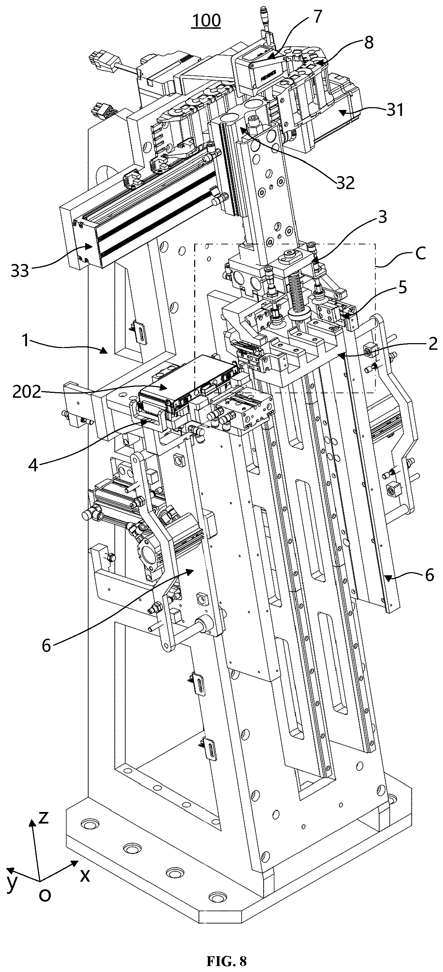

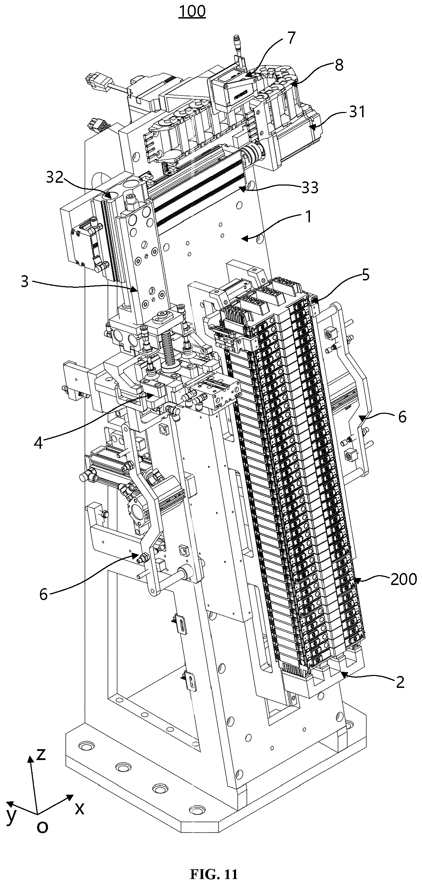

The position where the stacking platform 2 is located in Fig. 8 is the initial position. The initial position is the position where the clamping device 3 places the battery cell modules 200' on the stacking platform 2 at a safe distance. For example, the safe distance may be a distance not exceeding the thickness of a single battery cell module 200'. Subsequently, before stacking each layer of battery cell modules 200', the stacking platform 2 needs to be moved downward by a preset distance in the first direction z to keep the distance between the clamping device 3 and the topmost layer of battery cell module 200' constant, so as to place the next layer of battery cell module 200'. This process is repeated until all the battery cell modules 200' are stacked. Fig. 11 is a schematic diagram of the battery module 200 formed after the stacking is completed.

In this embodiment, the battery cell modules 200' are placed by lowering the stacking platform 2 layer by layer, so that all the battery cell modules 200' can be placed on the stacking platform 2 at the same distance, and the automated stacking process of the battery module 200 is made safe and reliable, improving the stacking accuracy, and reducing the safety risk during stacking.

In some embodiments, the initial position is configured such that a bottom of the battery cell module 200' is in contact with a top surface of the stacking platform 2.

When the bottom of the lowest layer of battery cell module 200' to be stacked is in contact with the top surface of the stacking platform 2 and the clamping device 3 is released, the battery cell module 200' is directly placed on the stacking platform 2 without relying on gravity to fall to the stacking platform 2. When placing the i-th layer of battery cell module 200' from the lowest layer, since the stacking platform 2 moves downward by a preset distance relative to the position where the (i-1)-th layer of battery cell module 200' is placed, the i-th layer of battery cell module 200' to be stacked is still directly placed on the (i-1)-th layer of battery cell module 200', without relying on gravity to fall to the (i-1)-th layer of battery cell module 200'.

In this embodiment, the battery cell module 200' can directly fall onto the stacking platform 2 when the clamping device 3 is released, eliminating the need to rely on gravity to fall to the stacking platform 2. It is possible to prevent damage to the battery cell modules 200' to be stacked that fall to the stacking platform 2 due to gravity, and also to prevent the impact of a falling battery cell module 200' from damaging the stacking platform 2 or the adjacent lower layer of battery cell module 200', and the position accuracy of the battery cell modules 200' placed on the stacking platform 2 can be improved. For example, the battery cell modules 200' each include a heat dissipation member 201 and a battery cell 202 arranged at the heat dissipation member 201. In this way, it is possible to avoid positional displacement between the heat dissipation member 201 and the battery cell 202 when placing the battery cell module 200'.

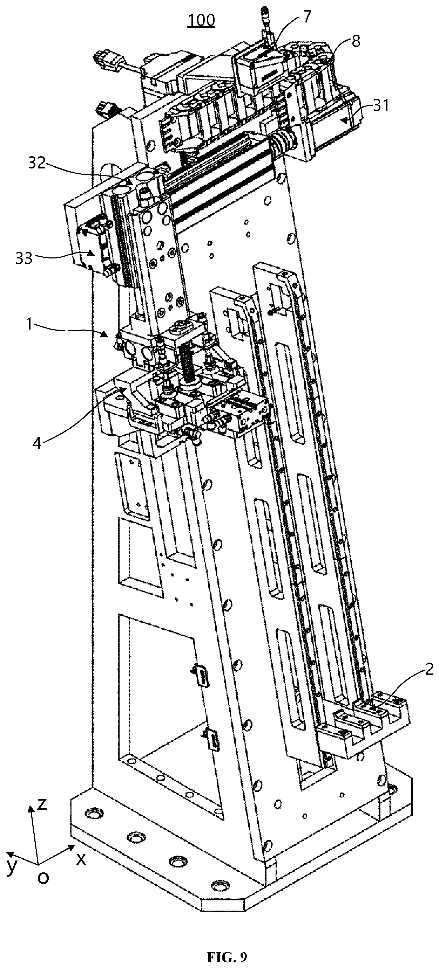

In some embodiments, as shown in Figs. 8 to 10, the battery module stacking device 100 further includes a displacement measurement component 7 configured to measure a movement distance of the stacking platform 2 in the first direction z.

The displacement measurement component 7 may be mounted on the top of the holder 1. For example, the displacement measurement component 7 may be a laser range finder, an infrared range finder, an ultrasonic range finder, etc. The distance measurement result of the displacement measurement component 7 may be fed back to a controller, and the controller controls the position of the stacking platform 2 in a closed loop based on the distance measurement result.

In this embodiment, by using the displacement measurement component 7 to measure the movement distance of the stacking platform 2, the position of the stacking platform 2 can be accurately controlled to realize the layer-by-layer stacking of battery module 200, so that it is possible to ensure the smooth stacking of each battery cell module 200', and improve the stacking safety of the battery cell modules 200' .

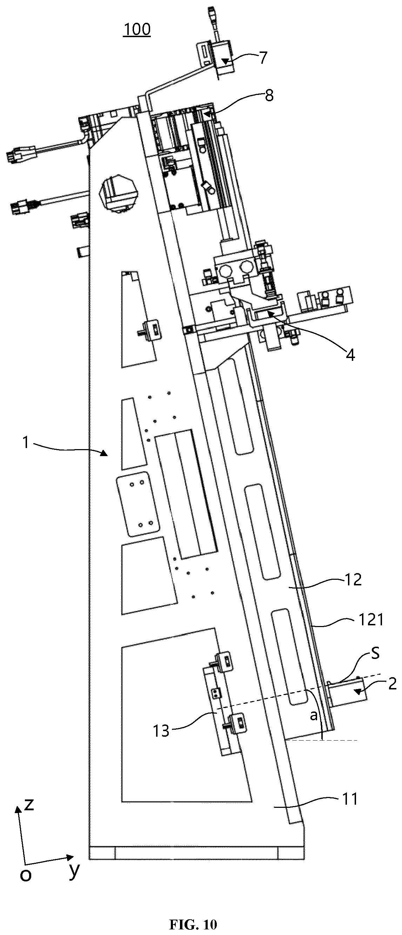

In some embodiments, as shown in Fig. 10, a preset angle a is formed between a carrying surface S of the stacking platform 2 and a horizontal plane.

The carrying surface S of the stacking platform 2 is a surface for placing the battery cell modules 200', and the carrying surface S is obliquely arranged relative to the horizontal plane. For example, the value range of a is [15°, 45°]. Preferably, the value of a is 75°. Optionally, the carrying surface S of the stacking platform 2 may also coincide with the horizontal plane.

In this embodiment, by obliquely arranging the carrying surface S of the stacking platform 2, during the stacking of the battery cell modules 200', the positioning or cooperation of adjacent battery cell modules 200' can be achieved by means of gravity, and the holder 1 can also be used to support the side surfaces of the plurality of battery cell modules 200', so that it is possible to prevent tipping when stacking a relatively high battery module 200 and improve the stacking safety.

In some embodiments, the holder 1 includes a mounting portion 11 and a supporting portion 12, the supporting portion 12 is arranged at a side portion of the mounting portion 11, the stacking platform 2 is movably mounted to the supporting portion 12 in the first direction z, the supporting portion 12 has a supporting surface 121 and is located on a lower side of the stacking platform 2, and the supporting surface 121 is perpendicular to the carrying surface S of the stacking platform 2.

The supporting portion 12 extends in the first direction z, and the supporting surface 121 is located on the side of the supporting portion 12 facing the stacking platform. When stacking the battery cell modules 200', the supporting surface 121 forms a stacking reference surface, and all the battery cell modules 200' abut against the supporting surface 121, facilitating the improvement of the alignment of the battery module 200 in the third direction y.

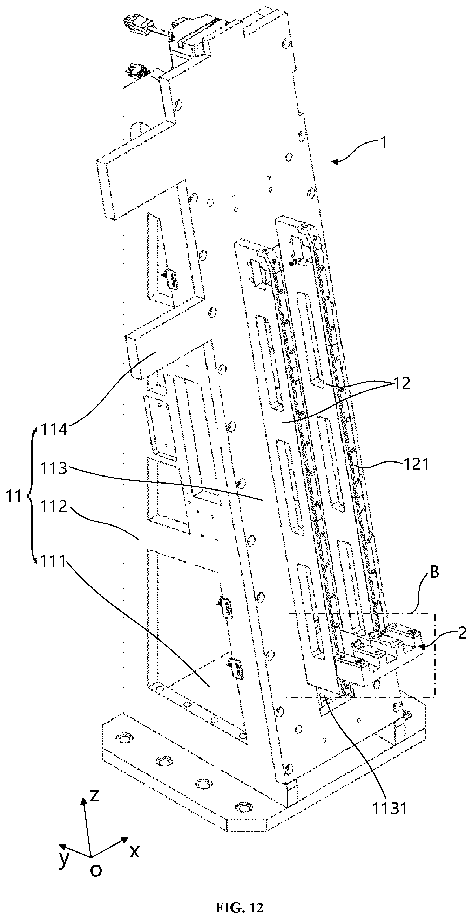

The specific structure of the holder 1 will be described below with reference to Figs. 12 to 14.

The mounting portion 11 of the holder 1 includes a bottom plate 111, two side plates 112 and a front plate 113. The two side plates 112 are arranged along the height direction, and the two side plates 112 are arranged in parallel and spaced apart from each other in the second direction x. The front plate 113 is located on one side of the side plate 112 in the third direction y, the front plate 113 can be obliquely arranged backward relative to the vertical plane, for example, at an inclination angle a. Correspondingly, the side plate 112 may be designed as a triangular structure.

The supporting portion 12 is mounted to the front plate 113. For example, the supporting portion 12 may be a plate-like structure, which is arranged perpendicular to the front plate 113. Two supporting portions 12 are provided and are arranged in parallel and spaced apart from each other in the second direction x. The surfaces of the two supporting portions 12 away from the front plate 113 form the supporting surface 121. The stacking platform 2 may abut against the supporting surface 121 or maintain a gap therewith. For example, the stacking platform 2 may move along the entire extension length of the supporting portion 12 to maximize the height of the stackable battery module 200.

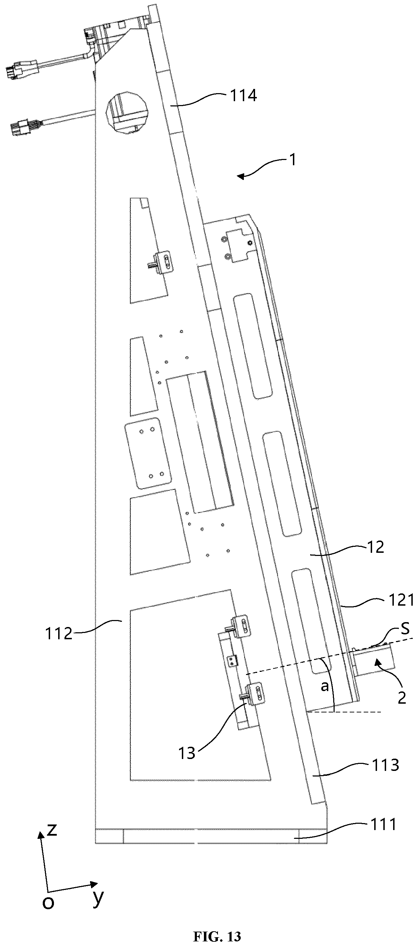

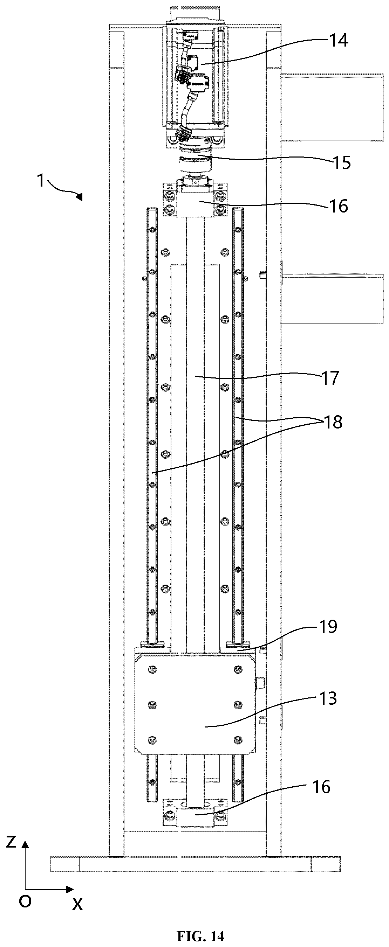

In order to realize the movement of the stacking platform 2, as shown in Figs. 13 and 14, the battery module stacking device 100 further includes a third driving component 14 for driving the stacking platform 2 to move in the first direction z. For example, the third driving component 14 may be an electric motor, a motor, an electric push rod, a hydraulic cylinder, a pneumatic cylinder, etc.

Optionally, the third driving component 14 takes the form of a driving component that outputs rotational motion, and converts the rotational motion into linear motion of the stacking platform 2 through a motion conversion component. The motion conversion component includes: a lead screw 17 and a nut 13. The lead screw 17 extends in the first direction z and has one end connected to an output end of the third driving component 14 via a coupling 15. Two ends of the lead screw 17 are respectively supported by first bearing seats 16. The first bearing seats 16 are mounted on the side of the front plate 113 of the holder 1 away from the stacking platform 2, and are respectively located at the top end and the bottom end of the lead screw 17. The nut 13 is sleeved outside the lead screw 17. In order to realize the smooth operation of the stacking platform 2 driven by the nut 13, two first guide rails 18 are provided on the holder 1, for example, they may be provided on the side of the front plate 113 away from the stacking platform 2. The two first guide rails 18 are respectively located on two sides of the lead screw 17 and extend in the first direction z. A first slide block 19 is mounted at each end of the nut 13 in the second direction x. The first slide blocks 19 may move along the first guide rails 18, to provide guidance for the movement of the stacking platform 2. The front plate 113 is provided with a through slot 1131 in the region of the two supporting portions 12. The stacking platform 2 and the nut 13 are connected to each other through the through slot 1131. The extension length of the through slot 1131 in the first direction z is not less than the movement stroke of the stacking platform 2.

In some embodiments, when during the stacking of the battery cell modules 200', the supporting surface 121 can be used to provide support to the side surfaces of the battery cell modules 200' to prevent the battery module 200 from tipping during the stacking; and the supporting surface 121 also forms a stacking reference surface, and the battery cell modules 200' all abut against the supporting surface 121, facilitating the improvement of the alignment of the battery module 200 in the third direction y.

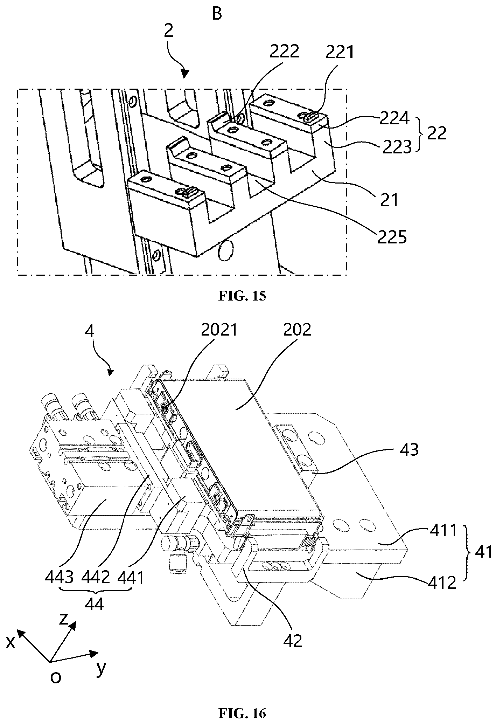

In some embodiments, as shown in Fig. 15, the stacking platform 2 includes: a connecting portion 21; and a plurality of first protrusions 22 arranged at intervals in a second direction x above the connecting portion 21. A first groove 225 is formed between two adjacent first protrusions 22 for removal of the battery module 200, the plurality of first protrusions 22 are configured to jointly carry the battery cell modules 200', and the second direction x is perpendicular to the first direction z.

The connecting portion 21 may be of a rectangular plate-like structure, the first protrusions 22 may be of a cuboid block-like structure, and the heights of the plurality of first protrusions 22 are the same, so that upper surfaces of the plurality of first protrusions 22 form the carrying surface of the battery cell module 200'. The plurality of first protrusions 22 are in contact with the plurality of second protrusions 2012 at the bottom of the heat dissipation member 201 of the lowest layer of battery cell module 200' in one-to-one correspondence, so as to provide stable support. For example, four first protrusions 22 may be provided, and the two outermost first protrusions 22 may respectively abut against the two supporting portions 12. When a battery cell module 200' is placed on the stacking platform 2, a rear side surface of the battery cell module 200' in the third direction y abuts against the supporting surface 121.

The first protrusions 22 may each include: a first portion 223 and a second portion 224. The second portion 224 is fixed to the top of the first portion 223 in the first direction z. The first portion 223 may be made of a metal material to ensure that the entire stacking platform 2 has the strength to withstand the weight of the battery module 200. The second portion 224 may be made of a plastic material, so that it is possible to reduce wear on the battery cell module 200' and prevent damage to the lowest layer of battery cell module 200'.

Moreover, the first groove 225 is formed between two adjacent first protrusions 22, so that after the stacking of the battery module 200 is completed, as shown in Fig. 11, a mechanical claw may extend deeply into the first groove 225 to remove the battery module 200 as a whole.

In this embodiment, by providing a stacking platform 2 with a plurality of first protrusions 22, the battery module 200 can be easily removed as a whole after the stacking of the battery module 200 is completed, thereby improving the assembly convenience. Furthermore, the plurality of first protrusions 22 are arranged to carry the battery cell modules 200', so that the accuracy of the carrying surface can be improved during processing compared with the monolithic carrying surface, the battery cell modules 200' can be placed stably on the stacking platform 2 to prevent shaking, and the stacking accuracy of the battery module 200 can be improved.

In some embodiments, as shown in Fig. 3, the battery module stacking device 100 further includes the battery cell modules 200' to be stacked. The battery cell modules 200' each includes: a heat dissipation member 201 and a battery cell 202 arranged at the heat dissipation member 201.

In this embodiment, by providing a heat dissipation member 201 correspondingly for each battery cell 202 in the battery module 200, the heat dissipation effect of the battery module 200 can be improved and the operation performance and fast charging capability of the battery 300 can be improved. Since adjacent heat dissipation members 201 need to be mounted through positioning or snap-fit structures during the stacking, the battery module stacking device 100 of the present application has a high stacking accuracy and can meet the stacking requirements of the battery module 200 with heat dissipation members 201.

In some embodiments, as shown in Fig. 15, the stacking platform 2 includes: a first limiting portion 221 configured to limit movement of the battery cell modules 200' in a second direction x, the second direction x being perpendicular to the first direction z and being the same as a length direction of the battery cell modules 200'; and/or a second limiting portion 222 configured to limit movement of the battery cell modules 200' in a third direction y, the third direction y being perpendicular to the first direction z and being the same as a width direction of the battery cell modules 200'.

The first limiting portion 221 and the second limiting portion 222 may be located on the top of the stacking platform 2, specifically, on the top of the first protrusions 22. Some of the first protrusions 22 may be provided with the first limiting portions 221, and the rest of the first protrusions 22 may be provided with the second limiting portions 222; or the first limiting portion 221 and the second limiting portion 222 may be provided on the same first protrusion 22. For example, four first protrusions 22 are provided, in which two first limiting portions 221 are respectively provided on the two outermost first protrusions 22, and two second limiting portions 222 are respectively provided on the intermediate two first protrusions 22. For example, the first limiting portion 221 is provided at the end of the first protrusion 22 away from the holder 1 in the third direction y, and the second limiting portion 222 is provided at the end of the first protrusion 22 close to the holder 1 in the third direction y.

In this embodiment, by providing the first limiting portion 221 and/or the second limiting portion 222, the lowest layer of battery cell module 200' can be positioned, so that it is possible to not only improve the positioning accuracy, but also to improve the placement stability of the lowest layer of battery cell module 200' on the stacking platform 2, facilitating the stable stacking of an upper layer of battery cell module 200'.

In some embodiments, as shown in Figs. 5 and 15, the battery cell modules 200' each include a heat dissipation member 201 and a battery cell 202 arranged at the heat dissipation member 201, the heat dissipation member 201 of the lowest layer of battery cell module 200' includes an accommodating shell 2011, a plurality of second protrusions 2012 are provided on a side of the accommodating shell 2011 away from the battery cell 202, which are arranged at intervals in the length direction of the battery cell module 200', and some of the second protrusions 2012 are provided with second grooves 2013. The first limiting portion 221 is configured to cooperate with the second groove 2013 to limit the movement of the battery cell module 200' in the second direction x; and/or the second limiting portion 222 is configured to limit an end of each of the second protrusions 2012 in the third direction y to limit the movement of the battery cell module 200' in the third direction y.

The first limiting portion 221 may be a protrusion with a rectangular, trapezoidal or triangular cross-section, which is provided at the end of the top of the connecting portion 21 away from the holder 1 in the third direction y. When the lowest layer of battery cell module 200' is placed on the stacking platform 2, the first limiting portion 221 is embedded in the second groove 2013 to restrict the movement of the battery cell module 200' in the second direction x. The second limiting portion 222 may be a protrusion with a rectangular, trapezoidal or triangular cross-section. Since the end of the carrying surface S of the stacking platform 2 away from the holder 1 in the third direction y is inclined upward, the second limiting portion 222 is provided at the end of the top of the connecting portion 21 close to the holder 1 in the third direction y, for restricting the movement of the second protrusion 2012 toward one side of the holder 1.

In this embodiment, through the structural cooperation between the stacking platform 2 and the heat dissipation member 201 of the lowest layer of battery cell module 200', the positioning of the battery cell module 200' is realized, so that it is possible to reliably prevent the bottom layer of battery cell module 200' from being displaced relative to the stacking platform 2 to achieve high-accuracy positioning.

In some embodiments, as shown in Figs. 11 and 12, the battery module stacking device 100 further includes: a positioning platform 4 configured to position the battery cell modules 200' to be stacked. The clamping device 3 is movably arranged and configured to obtain the battery cell modules 200' from the positioning platform 4 and place the battery cell modules on the stacking platform 2.

The front plate 113 of the holder 1 is provided with an extension plate 114 on one side in the second direction x. At least two extension plates 114 may be provided at intervals in the first direction z for mounting the positioning platform 4. In the first direction z, the clamping device 3 is located above the positioning platform 4. The positioning platform 4 is located in a region near an upper portion of the supporting portion 12 to minimize the movement stroke of the clamping device 3 when obtaining the battery cell module 200'.

The positioning platform 4 is used to place the battery cell modules 200' to be stacked in advance. The clamping device 3 is movably arranged relative to the holder 1. When a certain layer of battery cell module 200' needs to be stacked, the battery cell module 200' is first placed on the positioning platform 4 by the manipulator for accurate positioning, and then the clamping device 3 is moved to above the positioning platform 4 to clamp the battery cell module 200', and carries the battery cell module 200' to move above the stacking platform 2 for stacking. After the battery cell module 200' is removed, a next battery cell module 200' can be placed on the positioning platform 4.

In this embodiment, by providing the positioning platform 4, the battery cell modules 200' to be stacked can be placed on the positioning platform 4 in advance, so that it is possible to increase the degree of automation of stacking of the battery module 200. Moreover, after completing the stacking of a battery cell module 200', the clamping device 3 can obtain the next battery cell module 200' directly from the positioning platform 4, thereby saving the waiting time, so that it is possible to improve the continuity of the stacking process of the battery module 200 and improve the stacking efficiency. In addition, the positioning platform 4 can accurately position the battery cell module 200', ensuring the consistency of the position where the clamping device 3 clamps the battery cell module 200' every time, so that it is possible to improve the stacking accuracy of the battery module 200.

In some embodiments, the positioning platform 4 is located on a side surface of the stacking platform 2 in a second direction x, and the clamping device 3 is movably arranged in the first direction z and/or the second direction x, the second direction x being perpendicular to the first direction z.

It is possible that only one positioning platform 4 is provided, which is located on one side of the stacking platform 2; or two positioning platforms 4 are provided, which are respectively located on two sides of the stacking platform 2, to further maintain the continuity of supply of the battery cell modules 200' to be stacked.

As shown in Fig. 11, the battery module stacking device 100 further includes: a fourth driving component 31, a fifth driving component 32 and a transmission mechanism 33. The fourth driving component 31 is used to drive the clamping device 3 to move in the second direction x, and the fifth driving component 32 is used to drive the clamping device 3 to move in the third direction y. For example, the fourth driving component 31 and the fifth driving component 32 may be pneumatic cylinders, hydraulic cylinders, electric push rods, electric motors, etc. Optionally, the fourth driving component 31 may be an electric motor that can output rotational motion. The transmission mechanism 33 is a lead screw-nut transmission mechanism. One end of a lead screw is connected to an output end of the fourth driving component 31, and a nut is sleeved on the lead screw. The fifth driving component 32 is mounted to the nut, and the clamping device 3 is mounted to an output end of the fifth driving component 32. Since the fifth driving component 32 is movable, in order to ensure good power supply, power supply can be achieved by providing a drag chain 8.

During the stacking of a certain layer of battery cell module 200' to be stacked, the clamping device 3 first moves in the second direction x to above the positioning platform 4 to clamp the battery cell module 200', and then moves upward in the first direction z to separate the battery cell module 200' from the positioning platform 4, and then the clamping device 3 is moved in the second direction x to above the stacking platform 2. The clamping device 3 can choose whether to adjust the position in the first direction z according to the actual situation, and finally the battery cell module is 200' placed on the stacking platform 2.

In this embodiment, the clamping device 3 is movably arranged in the first direction z and/or the second direction x, so that the clamping device 3 can flexibly obtain the battery cell module 200' from the positioning platform 4 and place it on the stacking platform 2, and the degree of automation of stacking of the battery module 200 can be increased.

In some embodiments, as shown in Figs. 16 to 18, the positioning platform 4 includes: a carrying platform 41 configured to carry the battery cell modules 200'; and two first clamping portions 42 configured for clamping and positioning from two sides of the battery cell modules 200' in the second direction x, and to have an adjustable distance in the second direction x. The second direction x is perpendicular to the first direction z.

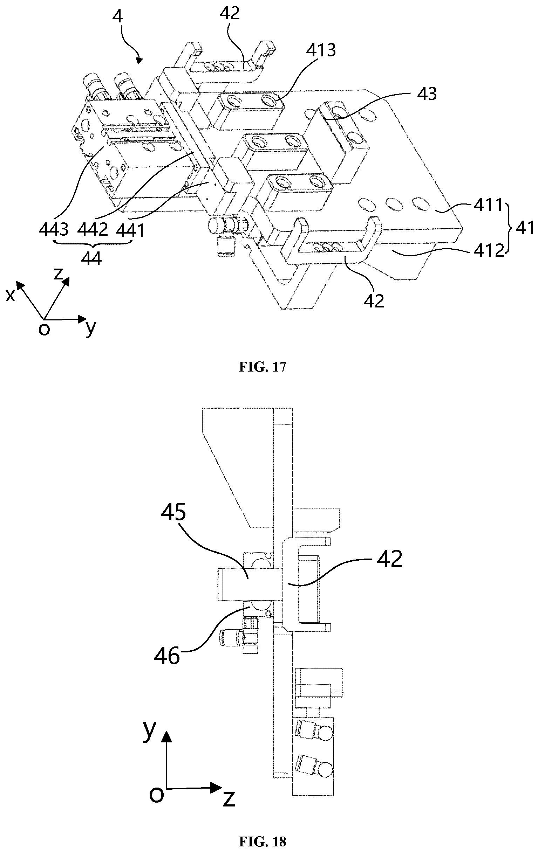

As shown in Fig. 17, the carrying platform 41 may include a supporting plate 411 and a plurality of third protrusions 413. The plurality of third protrusions 413 are arranged at intervals in the second direction x and located between the two first clamping portions 42. The battery cell module 200' is placed on the plane formed by top surfaces of the plurality of third protrusions 413. Such a structure can improve the machining accuracy of the top surfaces of the third protrusions 413 and easily ensure the levelness of the carrying surface, thereby improving the accuracy of positioning a bottom surface of the battery cell module 200'. In order to improve the strength of the supporting plate 411, a reinforcement plate 412 may also be provided at the bottom of the supporting plate 411.

As shown in Fig. 18, the positioning platform 4 further includes a sixth driving component 46 for driving the two first clamping portions 42 to move closer to or away from each other in the second direction x. The two first clamping portions 42 are respectively mounted to two output ends of the sixth driving component 46 via connecting blocks 45. For example, the sixth driving component 46 may be an electric motor, a motor, a hydraulic cylinder or a pneumatic cylinder. In Fig. 16, a centering pneumatic cylinder in the prior art is used, so that it is possible to drive the two first clamping portions 42 to move synchronously in the direction of moving closer to or away from each other.

In this embodiment, by making the distance between the two first clamping portions 42 adjustable in the second direction x, the battery cell modules 200' can be accurately positioned in the second direction x and the positioning accuracy of the battery cell modules 200' placed on the carrying platform 41 can be improved.

In some embodiments, as shown in Fig. 17, the positioning platform 4 further includes: a carrying platform 41 configured to carry the battery cell modules 200'; a first positioning portion 43 arranged on the carrying platform 41 and configured to position a side surface of each battery cell module 200' that is perpendicular to a third direction y and away from an electrode lead-out portion 2022; and a second positioning portion 44 arranged on the carrying platform 41 and configured to position a side surface of the battery cell module 200' that is perpendicular to the third direction y and away from the electrode lead-out portion 2022. The third direction y is perpendicular to the first direction z.

The first positioning portion 43 may be provided on the side of the plurality of third protrusions 413 close to the holder 1 in the third direction y, for positioning the side surface of the battery cell module 200' away from the electrode lead-out portion 2022. For example, the first positioning portion 43 may be a cuboid, trapezoid or other shaped raised portion. The second positioning portion 44 is provided on the side of the plurality of third protrusions 413 away from the holder 1 in the third direction y, and is a position-adjustable positioning component, so that it is possible to not only ensure that the battery cell module 200' is smoothly placed on the plurality of third protrusions 413, but also to perform accurate positioning in the third direction y according to the size and tolerance of the battery cell module 200'.

In this embodiment, by providing the first positioning portion 43 and the second positioning portion 44, the battery cell modules 200' can be accurately positioned in the third direction y, further improving the positioning accuracy of the battery cell modules 200' placed on the carrying platform 41.

In some embodiments, as shown in Figs. 16 and 17, the battery cell modules 200' each include a battery cell 202, the second positioning portion 44 includes two movable blocks 441, and the two movable blocks 441 are movably arranged in the third direction y, and are configured to respectively position the battery cell 202 in the third direction y.

The two movable blocks 441 respectively position the two electrode lead-out portions 2022 of the battery cell 202. The two movable blocks 441 are connected to each other via a first connector 442. The positioning platform 4 further includes a seventh driving component 443, an output end of which is connected to the first connector 442. The seventh driving component is used to drive the two movable blocks 441 to move in the third direction y, to achieve positioning when the movable blocks 441 abut against the electrode lead-out portions 2022.

In this embodiment, by providing two movable blocks 441, the side surface of the battery cell module 200' that is perpendicular to the third direction y and away from the electrode lead-out portion 2022 can be positioned, so that it is possible to not only adapt to battery cell modules 200' with different sizes in the third direction y, but also to apply an appropriate pre-tightening force to the battery cell modules 200' in the third direction y by the second positioning portion 44 during positioning, thereby ensuring the positioning accuracy while preventing damage to the battery cell modules 200'. Moreover, the second positioning portion can also be easily released when the clamping device 3 obtains the battery cell module 200'.

In some embodiments, the battery module stacking device 100 further includes: a positioning mechanism 5 located between the clamping device 3 and the stacking platforms 2 in the first direction z and configured to position the battery cell module 200' currently located on the top layer.

The positioning mechanism 5 is mounted to the holder 1, and the positioning mechanism 5 is located below the clamping device 3 in the first direction z, and has a fixed mounting position. Before placing the i-th layer of battery cell module 200', the (i-1)-th layer of batterv cell module 200' is positioned by the positioning mechanism 5 to prevent the (i-1)-th layer of battery cell module 200' from shaking when placing the i-th layer of battery cell module 200'. After the stacking of the i-th battery cell module 200' is completed, the positioning mechanism 5 is released from positioning the battery cell module 200', the stacking platform 2 is moved downward by a preset distance, and the positioning mechanism 5 is again used to position the i-th layer of battery cell module 200', for further stacking the (i+1)-th layer of battery cell module 200'. In this way, there is a unified reference when stacking each layer of battery cell module 200', and complete stacking can be achieved while ensuring the accuracy.

For example, the battery cell modules 200' each include a heat dissipation member 201 and a battery cell 202 arranged at the heat dissipation member 201. Through the accurate positioning of the battery cell module 200' currently located at the top layer by the positioning mechanism 5, it is possible to ensure that the respective heat dissipation members 201 of adjacent battery cell modules 200' have a high positioning accuracy, facilitating the positioning and connection of adjacent heat dissipation members 201, so that the stacking process becomes smoother, and the stacking accuracy requirements can be met when the heat dissipation member 201 is provided in the battery cell module 200'.

In this embodiment, by providing the positioning mechanism 5, the battery cell module 200' currently on the top layer can be positioned to prevent shaking when stacking an upper layer of battery cell module 200', so that it is possible to improve the stacking accuracy, and meet the requirements for high-accuracy stacking.

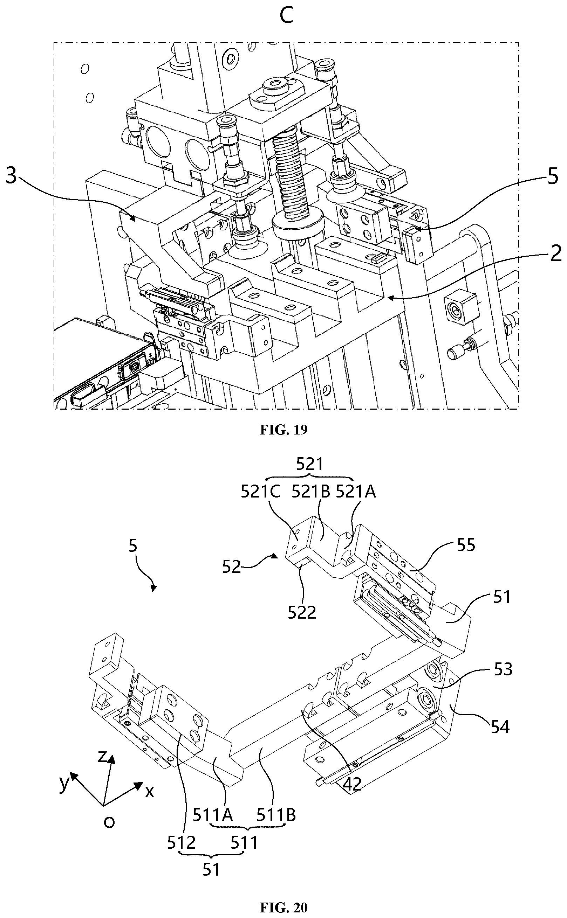

In some embodiments, as shown in Fig. 20, the positioning mechanism 5 includes: two second clamping portions 51 configured to clamp and position two sides of the battery cell module 200' currently located on the topmost layer in a second direction x. A distance between the two second clamping portions 51 is adjustable in the second direction x, and the second direction x is perpendicular to the first direction z.

The positioning mechanism 5 further includes an eighth driving component 53 for driving the two second clamping portions 51 to move closer to or away from each other in the second direction x. The two second clamping portions 51 are respectively mounted to two output ends of the sixth driving component 46. For example, the eighth driving component 53 may be an electric motor, a motor, a hydraulic cylinder or a pneumatic cylinder. In Fig. 20, a centering pneumatic cylinder in the prior art is used, so that it is possible to drive the two second clamping portions 51 to move synchronously in the direction of moving closer to or away from each other. The eighth driving component 53 may be mounted to the holder 1 via a first mounting block 54.

The second clamping portion 51 may be of an L-shaped structure, including a clamping arm 511. The clamping arm 511 includes: a first arm 511A and a second arm 511B. The second arm 511B is connected to a first end of the first arm 511A in the third direction y, the first arm 511A extends in the third direction y, and the second arm 511B extends in the second direction x. The second arm 511B may position the side surface of the battery cell module 200' that is perpendicular to the third direction y and away from the electrode lead-out portion 2022.

The second clamping portion 51 may further include a first pad 512 arranged on an inner side surface of the first arm 511A. For example, the first pad may be made of a material with a lower hardness such as plastic to prevent friction damage to the battery cell module 200'.

In this embodiment, by making the distance between the two second clamping portions 51 adjustable in the second direction x, it is possible to flexibly activate or deactivate the positioning of the battery cell module 200' currently located on the top layer, and to accurately position the battery cell module 200' in the second direction x. The application of an appropriate clamping force can also prevent damage to the battery cell module 200'. Moreover, such a positioning mechanism 5 can also be suitable for positioning battery cell modules 200' with different sizes in the second direction x.

In some embodiments, as shown in Fig. 20, the battery cell modules 200' each include a battery cell 202, and the positioning mechanism 5 further includes: two third positioning portions 52 respectively connected to respective ends of the two second clamping portions 51 in a third direction y. The third direction y is perpendicular to the first direction z and the second direction x. The third positioning portions 52 are movably arranged in the third direction y, and the third positioning portions 52 are configured to position an electrode lead-out portion 2022 of the battery cell 202 in the third direction y.

The third positioning portion 52 may be connected to a second end of the first arm 511A and include a positioning main body 521. The positioning main body 521 may include a first portion 521A, a second portion 521B and a third portion 521C that are connected in sequence to form a Z-shape. A first end of the first portion 521A is connected to the second end of the first arm 511A, and the first portion 521A extends toward the inner side of the first arm 511A in the second direction x. A first end of the second portion 521B is connected to a second end of the first portion 521A, a first end of the third portion 521C is connected to a second end of the second portion 521B, and the third portion 521C is arranged perpendicular to the third direction y. The third portion 521C is used to position the electrode lead-out portion 2022 of the battery cell 202.

The second clamping portion 51 may further include a second pad 522 arranged on an inner side surface of the third portion 521C. For example, the second pad may be made of a material with a lower hardness such as plastic to prevent friction damage to the battery cell module 200'.

The positioning mechanism 5 may further include two ninth driving components 55. The ninth driving component 55 is used to drive the third positioning portion 52 on the same side to move in the third direction y. The two second clamping portions 51 are respectively mounted to two output ends of the sixth driving component 46. Specifically, the ninth driving component 55 may be mounted to the outer side of the first arm 511A. For example, the ninth driving component 55 may be an electric motor, a motor, a hydraulic cylinder or a pneumatic cylinder.

In this embodiment, by a third positioning portion 52 that is movable in the third direction y, the side surface of the battery cell module 200' that is perpendicular to the third direction y and away from the electrode lead-out portion 2022 can be positioned, so that it is possible to not only adapt to battery cell modules 200' with different sizes in the third direction y, but also to apply an appropriate pre-tightening force to the battery cell modules 200' in the third direction y by the third positioning portion 52 during positioning, thereby ensuring the positioning accuracy while preventing damage to the battery cell modules 200'. Moreover, the third positioning portion can also be easily released when the clamping device 3 obtains the battery cell module 200'.

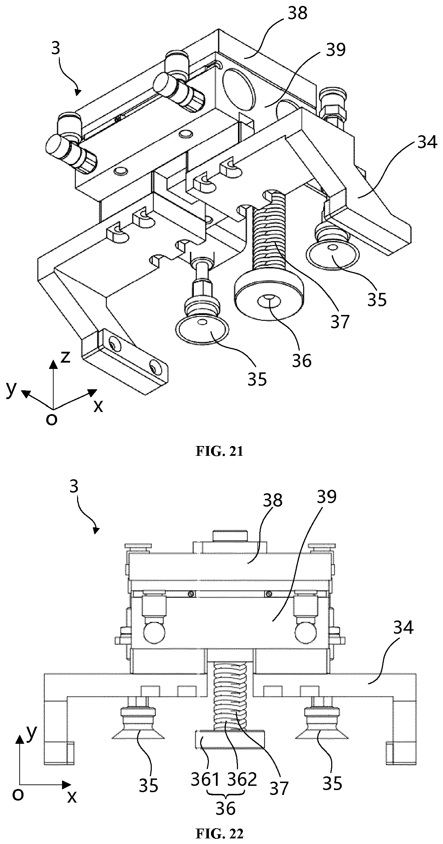

As shown in Figs. 21 and 22, the clamping device 3 includes: two third clamping portions 34 configured to clamp the battery cell modules 200' to be stacked, and to have an adjustable distance in a second direction x, the second direction x being perpendicular to the first direction z; and a negative pressure suction member 35 arranged between the two third clamping portions 34 and configured to suction a top surface of each of the battery cell modules 200' from a top of the battery cell module 200'.

The clamping device 3 further includes a tenth driving component 39 for driving the two third clamping portions 34 to move closer to or away from each other in the second direction x. The two third clamping portions 34 are respectively mounted to the two output ends of the sixth driving component 46. For example, the tenth driving component 39 may be an electric motor, a motor, a hydraulic cylinder or a pneumatic cylinder. In Fig. 21, a centering pneumatic cylinder in the prior art is used, so that it is possible to drive the two third clamping portions 34 to move synchronously in the direction of moving closer to or away from each other. The tenth driving component 39 may be mounted to the holder 1 via a second mounting block 38.

The negative pressure suction member 35 may be a suction cup. Two negative pressure suction members 35 may be provided and are arranged spaced apart from each other between the two third clamping portions 34 in the second direction x. The top surface of the battery cell 202 in the battery cell module 200' is exposed, and the negative pressure suction member 35 suctions the top surface of the battery cell 202.

In this embodiment, by making the distance between the two third clamping portions 34 adjustable in the second direction x, it is possible to flexibly clamp or release the battery cell module 200', and adapt to battery cell modules 200' with different sizes in the second direction x. Moreover, by providing the negative pressure suction member 35 for suctioning the battery cell module 200', the negative pressure suction member can jointly withstand the weight of the battery cell module 200' with the third clamping portions 34 during the transfer of the battery cell module 200', and can prevent the occurrence of positional displacement of the battery cell module 200' relative to the third clamping portions 34, so that it is possible to improve the stable transfer of the battery cell module 200' and ensure the relative position accuracy with respect to the clamping device 3 during the transfer, thereby improving the stacking accuracy of the battery cell modules 200'.

In some embodiments, as shown in the figures, the battery cell modules 200' each include a heat dissipation member 201 and a battery cell 202 arranged at the heat dissipation member 201, and the clamping device 3 further includes: a pressure applying member 36 arranged between the two third clamping portions 34 and configured to apply a pressing force to a top surface of the battery cell 202.

The pressure applying member 36 is arranged spaced apart from the negative pressure suction members 35 and may be located between the two negative pressure suction members 35. For example, the negative pressure suction members 35 may be located in the middle region of the battery cell module 200' so that the battery cell module 200' receives balanced force when being pressed. For example, the pressure applying member 36 may be mounted to the second mounting block 38. The pressure applying member 36 includes a pressure applying portion 361 and a connecting rod 362. A first end of the connecting rod 362 is mounted to the second mounting block 38. The pressure applying portion 361 is mounted to a second end of the connecting rod 362, and the pressure applying portion 361 has an outline size greater than that of the connecting rod 362. An elastic element 37 may be sleeved outside the connecting rod 362, so that the pressure applying portion 361 of the pressure applying member 36 applies an elastic pressing force to the top of the battery cell module 200'.

When it is necessary to obtain the battery cell module 200', the pressure applying member 36 may be used to press the battery cell module 200' first, then the negative pressure suction member 35 may be used to suction the top surface of the battery cell 202, and then the two third clamping portions 34 may be used to clamp the battery cell module 200'. Next, when it is necessary to release the battery cell module 200', the two third clamping portions 34 may first release the battery cell module 200', then a positive pressure gas is introduced into the negative pressure suction member 35 to release the suction effect, and the battery cell module 200' falls under the action of the elastic element 37. Optionally, the order of the above steps can also be changed.

In this embodiment, considering that the top surface of the battery cell 202 in the battery cell module 200' is exposed, when the negative pressure suction member 35 suctions the top surface of the battery cell 202, it is likely to suck the battery cell 202 out of the heat dissipation member 201. Before suction, the battery cell 202 is compressed by the pressure applying member 36, so that it is possible to prevent the occurrence of positional displacement or disengagement of the battery cell 202 relative to the heat dissipation member 201.

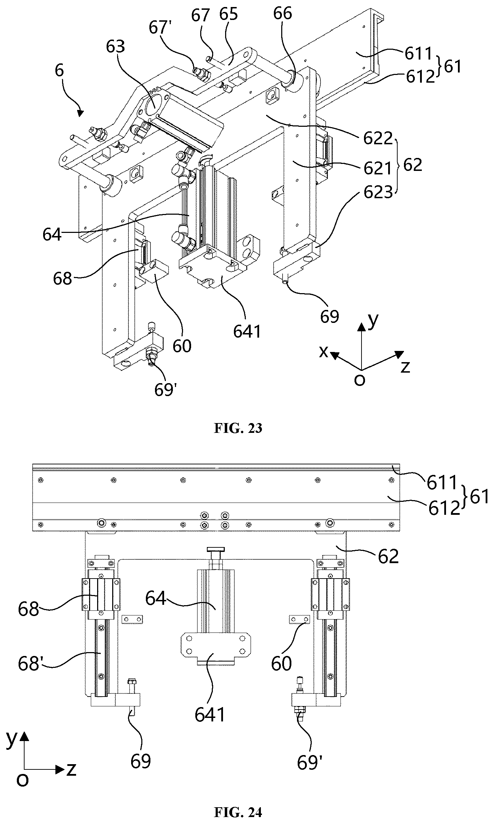

In some embodiments, as shown in Figs. 23 and 24, the battery module stacking device 100 further includes an anti-tip device 6 arranged on the holder 1. The anti-tip device 6 includes a movable component 61 movable in a second direction x, and is configured to maintain a first preset gap with a side surface of each of the battery cell modules 200' perpendicular to the second direction x during stacking, and to move away to take out the battery module 200 after all the battery cell modules 200' are stacked.

In the second direction x, the anti-tip device 6 may be located on the outer side of the stacking platform 2. Two anti-tip devices 6 may be provided, which are respectively located on two sides of the stacking platform 2 in the second direction x.

In this embodiment, by providing the anti-tip device 6 and maintaining the first preset gap with the side surface of the battery cell module 200' perpendicular to the second direction x during the stacking, it is possible to not only prevent the plurality of battery cell modules 200' from tipping during the stacking, but also to allow the stacking platform 2 to drive the battery cell modules 200' to move flexibly in the first direction z.

In some embodiments, the anti-tip device 6 further includes: a mounting member 62 arranged on an outer side of the movable component 61 in the second direction x; and a first driving component 63 arranged on a side of the mounting member 62 away from the movable component 61, and configured to drive the movable component 61 to move relative to the mounting member 62 in the second direction x.

The mounting member 62 may be of a plate-like C-shaped structure, including two first plates 621 and a second plate 622. The two first plates 621 are arranged spaced apart from each other in the first direction z, and two ends of the second plate 622 are connected between respective first ends of the two first plates 621. The first driving component 63 may be mounted to the second plate 622, and its output end may be connected to the movable component 61. For example, the movable component 61 may include a main body portion 611, and the main body portion 611 is of an L-shaped plate-like structure. The movable component 61 may further include a pad 612. The pad 612 may be provided on an inner surface of the main body portion 611, and may be made of plastic or other materials to reduce friction between the movable component 61 and the battery cell module 200'.

In order to improve the stability of the movement of the movable component 61 in the second direction x, two linear bearings 66 may be provided on the mounting member 62 which are arranged spaced apart from each other in the first direction z. The two linear bearings 66 are located on two sides of the first driving component 63. Respective first ends of the linear bearings 66 are both connected to the movable component 61, and respective second ends of the two linear bearings 66 are connected to two ends of a second connector 65. The second connector 65 may be an elongated plate-like or rod-like mechanism, and may be provided with a bent portion to avoid the first driving component 63. When the first driving component 63 drives the movable component 61 to move in the second direction x, the second connector 65 also moves accordingly.

Optionally, a first limiting member 67 and a second limiting member 67' may be further provided on the side of the second connector 65 away from the movable component 61. The first limiting member 67 is a rigid limiting member, and the second limiting member 67' is an elastic limiting member, so that it is possible to limit the extreme position of the outward movement of the movable component 61 in the second direction x. During the outward movement of the movable component 61, the second limiting member 67' first touches the holder 1 for elastic buffering and deceleration, and the movable component is then limited by the first limiting member 67 during the continuous movement. For example, two sets of the first limiting member 67 and the second limiting member 67' may be provided on the two sides of the first driving component 63.

In this embodiment, the first driving component 63 drives the movable component 61 to move in the second direction x, and the gap with the side surface of the battery cell module 200' can be flexibly adjusted, so that it is possible to not only prevent the plurality of battery cell modules 200' from tipping during the stacking, but also to allow the stacking platform 2 to drive the battery cell modules 200' to move flexibly in the first direction z. After the stacking is completed, the movable component 61 can also be moved away to easily remove the battery module 200.

In some embodiments, the movable component 61 is movable ina third direction y and is configured to maintain a second preset gap with an outer side surface of the battery cell module 200' perpendicular to the third direction y during the stacking, and to move away to take out the battery module 200 after all the battery cell modules 200' are stacked.

The anti-tip device 6 of this embodiment can maintain the second preset gap with the outer side surface of the battery cell module 200' perpendicular to the third direction y during the stacking, so that it is possible to not only prevent the plurality of battery cell modules 200' from tipping during the stacking, but also to allow the stacking platform 2 to drive the battery cell modules 200' to move flexibly in the first direction z.

In some embodiments, as shown in Figs. 23 and 24, the anti-tip device 6 further includes: a mounting member 62 arranged on an outer side of the movable component 61 in the second direction x; and a second driving component 64 fixedly mounted to the holder 1 and configured to drive the mounting member 62 and the movable component 61 to move in the third direction y.

The first driving component 63 may be mounted to the holder 1 via a mounting seat 641, and its output end may be connected to the mounting member 62, specifically to the second plate 622. The second driving component 64 may drive the mounting member 62 and the movable component 61 to move together in the third direction y.

In order to improve the stability of the movement of the movable component 61 in the third direction y, two second guide rails 68' spaced apart from each other in the first direction z may be provided on the mounting member 62. Specifically, the two second guide rails 68' may be respectively provided on the two first plates 621 and extend in the third direction y. Two second slide blocks 68 are fixed on the holder 1, and the second slide blocks 68 may move relative to each other along the second guide rails 68' on the same side.

Optionally, the mounting member 62 further includes an extension block 623, which is arranged at the outer end of each first plate 621 in the third direction y and extends beyond the inner side of the first plate 621 in the first direction z. A third limiting member 69 may be provided on the part of one of the extension blocks 623 extending beyond the first plate 621, and a fourth limiting member 69' may be provided on the part of the other extension block 623 extending beyond the first plate 621. The third limiting member 69 is a rigid limiting member, and the fourth limiting member 69' is an elastic limiting member, so that it is possible to limit the extreme position of the outward movement of the movable component 61 in the third direction y. Blocking members 60 are respectively provided on the two second slide blocks 68.

When the second driving component 64 drives the mounting member 62 and the movable component 61 to move together in the third direction y, the fourth limiting member 69' first touches the blocking member 60 for elastic buffering and deceleration, and the mounting member and the movable component are then limited by the third limiting member 69 during the continuous movement.

In this embodiment, the second driving component 64 drives the movable component 61 to move in the third direction y, and the gap with the side surface of the battery cell module 200' where the electrode lead-out portion 2022 is located can be flexibly adjusted, so that it is possible to not only prevent the plurality of battery cell modules 200' from tipping during the stacking, but also to allow the stacking platform 2 to drive the battery cell modules 200' to move flexibly in the first direction z. After the stacking is completed, the movable component 61 can also be moved away to easily remove the battery module 200.

The operation mode of the battery module stacking device 100 of the present application will be described below through a specific embodiment. The movement of each component is controlled by the controller.
1. The battery cell module 200' to be stacked are placed on the positioning platform 4 by a first manipulator, and are positioned by the positioning platform 4.
2. The clamping device 3 moves in the second direction x to above the positioning platform 4 and moves downward in the first direction z to press the top of the battery cell module 200' by using a pressure applying member 36, then the negative pressure suction member 35 is used to suction the top of the battery cell module 200', the positioning platform 4 releases the positioning, and the two third clamping portions 34 of the clamping device 3 clamp two side surfaces of the battery cell module 200' in the length direction.
3. The clamping device 3 clamps the battery cell module 200' and then moves in the second direction x to above the stacking platform 2.
4. The stacking platform 2 is lowered by a preset distance, and the positioning mechanism 5 positions the topmost lay of battery cell module 200'. At this time, the clamping device 3 places the battery cell module 200' on the stacking platform 2; and after the placement of the battery cell module 200' is completed, the positioning mechanism 5 releases the positioning.
5. The above steps 1 to 4 are repeated in sequence until all the battery cell modules 200' are stacked.

In this embodiment, for the structure in which the heat dissipation member 201 is provided in the battery cell module 200', the limiting structure on the stacking platform 2, the positioning platform 4 and the positioning mechanism 5 can jointly ensure the stacking accuracy of the battery cell module 200' to meet the stacking requirements of the battery module 200.

In some embodiments, the present application also provides a battery production system, including a battery module stacking device 100 of the above embodiments.

Optionally, the battery production system may further include a first manipulator and a second manipulator The first manipulator is used to place the battery cell module 200' on the positioning platform 4, and the second manipulator is used to remove the battery module 200 from the stacking platform 2 after the stacking is completed.

Optionally, the battery production system may include a plurality of battery module stacking devices 100, which may be arranged in a rectangular array, such as in two rows, with one or more battery module stacking devices 100 in each row. The corresponding stacking platforms 2 of the two rows of battery module stacking devices 100 face opposite directions and all face outward, facilitating the removal of the stacked battery modules 200. Such a system can realize parallel stacking of a plurality of battery modules 200, thereby improving the production efficiency. Alternatively, only one battery module stacking device 100 may be provided in the battery production system.

The battery production system of this embodiment can improve the stacking efficiency and quality of the battery module 200, thereby improving the production efficiency and quality of batteries 300.

In some embodiments, a battery module stacking method is provided, in which a battery module 200 includes a plurality of battery cell modules 200' arranged side by side in a first direction z. The battery module stacking method includes:
S110: clamping, by a clamping device 3 arranged at a holder 1, the battery cell modules 200' to be stacked;
S120: moving a stacking platform 2 arranged at the holder 1 to a proper position in the first direction z; and
S130: causing the clamping device 3 to place the battery cell modules 200' on the stacking platform 2 from above the stacking platform 2.

The execution order of S110 and S120 is not limited, and S130 is executed after S110 and S120.

The battery module stacking method of this embodiment can realize automatic stacking through the movement cooperation between the clamping device 3 and the stacking platform 2, and thus can improve the stacking efficiency of the battery module 200, thereby improving the production efficiency of batteries 300, and reducing labor costs and labor intensity; and by using the clamping device 3 to place the battery cell modules 200', the positioning accuracy between adjacent battery cell modules 200' can be improved, thereby ensuring the stacking quality of the battery module 200. In addition, by moving the stacking platform 2 in the first direction z, the clamping device 3 can place the battery cell modules 200' on the stacking platform 2 at a safe distance, so that it is possible to prevent damage to the battery cell modules 200' and to help ensure the alignment of adjacent battery cell modules 200'.

In some embodiments, the battery module stacking method further includes:
bringing the stacking platform 2 into an initial position when placing the lowest layer of battery cell module 200'; and
moving the stacking platform 2 downward by a preset distance relative to the position where the (i-1)-th layer of battery cell module 200' is placed when placing the i-th layer of battery cell module 200' from the lowest layer, wherein the preset distance is the thickness of the battery cell module 200' in the first direction z; and i = 2, 3, 4....

In this embodiment, the battery cell modules 200' are placed by lowering the stacking platform 2 layer by layer, so that all the battery cell modules 200' can be placed on the stacking platform 2 at the same distance, and the automated stacking process of the battery module 200 is made safe and reliable, improving the stacking accuracy, and reducing the safety risk during stacking.

In some embodiments, the battery cell modules 200' each include a heat dissipation member 201 and a battery cell 202 arranged at the heat dissipation member 201; and during stacking of adjacent battery cell modules 200', the respective heat dissipation members 201 of the adjacent battery cell modules 200' cooperate with each other.

The adjacent heat dissipation members 201 can be positioned with each other through the cooperation between the positioning portion and the protective portion 2015, so as to improve the alignment of the plurality of battery cell modules 200' and improve the structural stability of the plurality of battery cell modules 200' after they are stacked. After the clamping device 3 releases the battery cell module 200', in order to ensure that the adjacent heat dissipation members 201 are mounted in place, the clamping device 3 may be moved downward to apply a downward acting force to the battery cell module 200' by means of the pressure applying member 36.

In this embodiment, it is possible to improve the alignment of the plurality of battery cell modules 200' and improve the structural stability of the plurality of battery cell modules 200' after they are stacked.

In some embodiments, the battery module stacking method further includes:
before clamping the battery cell modules 200' by the clamping device 3, placing the battery cell modules 200' to be stacked on a positioning platform 4;
positioning the battery cell modules 200' by the positioning platform 4; and
moving the clamping device 3 to above the positioning platform 4, and obtaining the battery cell modules 200' from the positioning platform 4.

The three steps are executed in sequence.

In this embodiment, the battery cell modules 200' to be stacked can be placed on the positioning platform 4 in advance, so that it is possible to increase the degree of automation of stacking of the battery module 200. Moreover, after completing the stacking of a battery cell module 200', the clamping device 3 can obtain the next battery cell module 200' directly from the positioning platform 4, thereby saving the waiting time, so that it is possible to improve the continuity of the stacking process of the battery module 200 and improve the stacking efficiency. In addition, the positioning platform 4 can accurately position the battery cell module 200', ensuring the consistency of the position where the clamping device 3 clamps the battery cell module 200' every time, so that it is possible to improve the stacking accuracy of the battery module 200.

In some embodiments, the battery module stacking method further includes:
before placing the i-th layer of battery cell module 200' from the lowest layer on the stacking platform 2, positioning, by a positioning mechanism 5 arranged at the holder 1, the (i-1)-th layer of battery cell module 200', where i = 2, 3, 4...; and
after the i-th layer of battery cell module 200' is placed on the stacking platform 2, separating the positioning mechanism 5 from the (i-1)-th layer of battery cell module 200'.

In this embodiment, by providing the positioning mechanism 5, the battery cell module 200' currently on the top layer can be positioned to prevent shaking when stacking an upper layer of battery cell module 200', so that it is possible to improve the stacking accuracy, and meet the requirements for high-accuracy stacking.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery module stacking device (100), in which a battery module (200) comprises a plurality of battery cell modules (200') arranged side by side in a first direction (z), the battery module stacking device (100) comprising:
a holder (1);
a stacking platform (2) movably arranged at the holder (1) in the first direction (z); and
a clamping device (3) arranged at the holder (1) and configured to clamp the battery cell modules (200') to be stacked and to place the battery cell modules (200') on the stacking platform (2) from above the stacking platform (2); wherein the clamping device (3) comprises:
two third clamping portions (34) configured to clamp the battery cell modules (200') to be stacked, and to have an adjustable distance in a second direction (x), the second direction (x) being perpendicular to the first direction (z); and
a negative pressure suction member (35) arranged between the two third clamping portions (34) and configured to suction a top surface of each of the battery cell modules (200') from a top of the battery cell module (200').

2. The battery module stacking device (100) according to claim 1, wherein the stacking platform (2) is configured to be in an initial position when placing the lowest layer of battery cell module (200'), and to move downward by a preset distance relative to the position where the (i-1)-th layer of battery cell module (200') is placed when placing the i-th layer of battery cell module (200') from the lowest layer, and the preset distance is the thickness of the battery cell module (200') in the first direction (z), where i = 2, 3, 4....

3. The battery module stacking device (100) according to claim 2, wherein the initial position is configured such that a bottom of the battery cell module (200') is in contact with a top surface of the stacking platform (2).

4. The battery module stacking device (100) according to any one of claims 1 to 3, further comprising a displacement measurement component (7) configured to measure a movement distance of the stacking platform (2) in the first direction (z).

5. The battery module stacking device (100) according to any one of claims 1 to 4, wherein the stacking platform (2) comprises:
a connecting portion (21); and
a plurality of first protrusions (22) provided at intervals in a second direction (x) above the connecting portion (21), wherein a first groove (225) is formed between two adjacent first protrusions (22) for removal of the battery module (200), the plurality of first protrusions (22) are configured to jointly carry the battery cell modules (200'), and the second direction (x) is perpendicular to the first direction (z);
and/or
further comprising the battery cell modules (200') to be stacked, wherein the battery cell modules (200') each comprises: a heat dissipation member (201) and a battery cell (202) arranged at the heat dissipation member (201).

6. The battery module stacking device (100) according to any one of claims 1 to 5, wherein the stacking platform (2) comprises:
a first limiting portion (221) configured to limit movement of the battery cell modules (200') in a second direction (x), the second direction (x) being perpendicular to the first direction (z) and being the same as a length direction of the battery cell modules (200'); and/or
a second limiting portion (222) configured to limit movement of the battery cell modules (200') in a third direction (y), the third direction (y) being perpendicular to the first direction (z) and being the same as a width direction of the battery cell modules (200').

7. The battery module stacking device (100) according to claim 6, wherein the battery cell modules (200') each comprise a heat dissipation member (201) and a battery cell (202) arranged at the heat dissipation member (201), the heat dissipation member (201) of the lowest layer of battery cell module (200') comprises an accommodating shell (2011), a plurality of second protrusions (2012) are provided on a side of the accommodating shell (2011) away from the battery cell (202), which are provided at intervals in the length direction of the battery cell module (200'), and some of the second protrusions (2012) are provided with second grooves (2013);
wherein the first limiting portion (221) is configured to cooperate with the second groove (2013) to limit the movement of the battery cell module (200') in the second direction (x); and/or the second limiting portion (222) is configured to limit an end of each of the second protrusions (2012) in the third direction (y) to limit the movement of the battery cell module (200') in the third direction (y).

8. The battery module stacking device (100) according to any one of claims 1 to 7, further comprising: a positioning platform (4) configured to position the battery cell modules (200') to be stacked; wherein the clamping device (3) is movably arranged and configured to obtain the battery cell modules (200') from the positioning platform (4) and place the battery cell modules on the stacking platform (2).

9. The battery module stacking device (100) according to claim 8, wherein the positioning platform (4) is located on a side surface of the stacking platform (2) in a second direction (x), and the clamping device (3) is movably arranged in the first direction (z) and/or the second direction (x), the second direction (x) being perpendicular to the first direction (z);
and/or
wherein the positioning platform (4) comprises:
a carrying platform (41) configured to carry the battery cell modules (200'); and
two first clamping portions (42) configured for clamping and positioning from two sides of the battery cell modules (200') in the second direction (x), and to have an adjustable distance in the second direction (x), the second direction (x) being perpendicular to the first direction (z);
and/or
wherein the positioning platform (4) further comprises:
a carrying platform (41) configured to carry the battery cell modules (200');
a first positioning portion (43) arranged on the carrying platform (41) and configured to position a side surface of each battery cell module (200') that is perpendicular to a third direction (y) and away from an electrode lead-out portion (2022); and
a second positioning portion (44) arranged on the carrying platform (41) and configured to position a side surface of the battery cell module (200') that is perpendicular to the third direction (y) and away from the electrode lead-out portion (2022);
wherein the third direction (y) is perpendicular to the first direction (z),
preferably,
the battery cell modules (200') each comprise a battery cell (202), the second positioning portion (44) comprises two movable blocks (441), and the two movable blocks (441) are movably arranged in the third direction (y), and are configured to respectively position the battery cell (202) in the third direction (y).

10. The battery module stacking device (100) according to any one of claims 1 to 9, further comprising: a positioning mechanism (5) located between the clamping device (3) and the stacking platforms (2) in the first direction (z) and configured to position the battery cell module (200') currently located on the top layer;
preferably,
the positioning mechanism (5) comprises:
two second clamping portions (51) configured to clamp and position two sides of the battery cell module (200') currently located on the topmost layer in a second direction (x), wherein a distance between the two second clamping portions (51) is adjustable in the second direction (x), and the second direction (x) is perpendicular to the first direction (z);
more preferably,
the battery cell modules (200') each comprise a battery cell (202), and the positioning mechanism (5) further comprises:
two third positioning portions (52) respectively connected to respective ends of the two second clamping portions (51) in a third direction (y), the third direction (y) being perpendicular to the first direction (z) and the second direction (x), wherein the third positioning portions (52) are movably arranged in the third direction (y), and the third positioning portions (52) are configured to position an electrode lead-out portion (2022) of the battery cell (202) in the third direction (y).

11. The battery module stacking device (100) according to any one of claims 1 to 10, wherein the clamping device (3) comprises:
the battery cell modules (200') each comprise a heat dissipation member (201) and a battery cell (202) arranged at the heat dissipation member (201), and the clamping device (3) further comprises:
a pressure applying member (36) arranged between the two third clamping portions (34) and configured to apply a pressing force to a top surface of the battery cell (202),
and/or
wherein a preset angle (a) is formed between a carrying surface (S) of the stacking platform (2) and a horizontal plane,
preferably,
the holder (1) comprises a mounting portion (11) and a supporting portion (12), the supporting portion (12) is arranged at a side portion of the mounting portion (11), the stacking platform (2) is movably mounted to the supporting portion (12) in the first direction (z), the supporting portion (12) has a supporting surface (121) and is located on a lower side of the stacking platform (2), and the supporting surface (121) is perpendicular to the carrying surface (S) of the stacking platform (2).

12. The battery module stacking device (100) according to any one of claims 1 to 11, further comprising an anti-tip device (6) arranged on the holder (1), wherein the anti-tip device (6) comprises a movable component (61) movable in a second direction (x), and is configured to maintain a first preset gap with a side surface of each of the battery cell modules (200') perpendicular to the second direction (x) during stacking, and to move away to remove the battery module (200) after all the battery cell modules (200') are stacked.

13. The battery module stacking device (100) according to claim 12, wherein the anti-tip device (6) further comprises:
a mounting member (62) arranged on an outer side of the movable component (61) in the second direction (x); and
a first driving component (63) arranged on a side of the mounting member (62) away from the movable component (61), and configured to drive the movable component (61) to move relative to the mounting member (62) in the second direction (x);
and/or
the movable component (61) is movable in a third direction (y) and is configured to maintain a second preset gap with an outer side surface of the battery cell module (200') perpendicular to the third direction (y) during the stacking, and to move away to remove the battery module (200) after all the battery cell modules (200') are stacked,
preferably,
the anti-tip device (6) further comprises:
a mounting member (62) arranged on an outer side of the movable component (61) in the second direction (x); and
a second driving component (64) fixedly mounted to the holder (1) and configured to drive the mounting member (62) and the movable component (61) to move in the third direction (y).

14. A battery production system comprising a battery module stacking device (100) of any one of claims 1 to 13.

15. A battery module stacking method, the method using the battery module stacking device of claim 1, in which a battery module (200) comprises a plurality of battery cell modules (200') arranged side by side in a first direction (z), the battery module stacking method comprising:
clamping, by a clamping device (3) arranged at a holder (1), the battery cell modules (200') to be stacked;
moving a stacking platform (2) arranged at the holder (1) to a proper position in the first direction (z); and
causing the clamping device (3) to place the battery cell modules (200') on the stacking platform (2) from above the stacking platform (2); preferably,
further comprising:
bringing the stacking platform (2) into an initial position when placing the lowest layer of battery cell module (200'); and
moving the stacking platform (2) downward by a preset distance relative to the position where the (i-1)-th layer of battery cell module (200') is placed when placing the i-th layer of battery cell module (200') from the lowest layer, wherein the preset distance is the thickness of the battery cell module (200') in the first direction (z); and i = 2, 3, 4....,
and/or
the battery cell modules (200') each comprise a heat dissipation member (201) and a battery cell (202) arranged at the heat dissipation member (201); and during stacking of adjacent battery cell modules (200'), the respective heat dissipation members (201) of the adjacent battery cell modules (200') cooperate with each other,
and/or
further comprising:
before clamping the battery cell modules (200') by the clamping device (3), placing the battery cell modules (200') to be stacked on a positioning platform (4);
positioning the battery cell modules (200') by the positioning platform (4); and
moving the clamping device (3) to above the positioning platform (4), and obtaining the battery cell modules (200') from the positioning platform (4),
and/or
further comprising:
before placing the i-th layer of battery cell module (200') from the lowest layer on the stacking platform (2), positioning, by a positioning mechanism (5) arranged at the holder (1), the (i-1)-th layer of battery cell module (200'), where i = 2, 3, 4...; and
after the i-th layer of battery cell module (200') is placed on the stacking platform (2), separating the positioning mechanism (5) from the (i-1)-th layer of battery cell module (200').

## Patentansprüche

1. Batteriemodulstapelvorrichtung (100), wobei ein Batteriemodul (200) mehrere Batteriezellmodule (200') umfasst, die Seite an Seite in einer ersten Richtung (z) angeordnet sind, wobei die Batteriemodulstapelvorrichtung (100) Folgendes umfasst:
einen Halter (1);
eine Stapelplattform (2), die am Halter (1) in der ersten Richtung (z) bewegbar angeordnet ist; und
eine Klemmvorrichtung (3), angeordnet am Halter (1) und dazu ausgelegt, die zu stapelnden Batteriezellmodule (200') einzuklemmen und die Batteriezellmodule (200') von über der Stapelplattform (2) auf der Stapelplattform (2) zu platzieren;
wobei die Klemmvorrichtung (3) Folgendes umfasst:
zwei dritte Klemmabschnitte (34), dazu ausgelegt, die zu stapelnden Batteriezellmodule (200') einzuklemmen und einen einstellbaren Abstand in einer zweiten Richtung (x) aufzuweisen, wobei die zweite Richtung (x) senkrecht zur ersten Richtung (z) ist; und
ein Unterdruck-Saugelement (35), angeordnet zwischen den zwei dritten Klemmabschnitten (34) und ausgelegt zum Ansaugen einer oberen Oberfläche jedes der Batteriezellmodule (200') von einer Oberseite des Batteriezellmoduls (200').

2. Batteriemodulstapelvorrichtung (100) nach Anspruch 1, wobei die Stapelplattform (2) dazu ausgelegt ist, beim Platzieren der unteren Schicht des Batteriezellmoduls (200') in einer anfänglichen Position zu sein, und sich beim Platzieren der i-ten Schicht des Batteriezellmoduls (200') von der untersten Schicht um eine voreingestellte Strecke relativ zu der Position nach unten zu bewegen, wo die (i-1)-te Schicht des Batteriezellmoduls (200') platziert ist, und wobei die voreingestellte Strecke die Dicke des Batteriezellmoduls (200') in der ersten Richtung (z) ist, wobei i = 2, 3, 4 ....

3. Batteriemodulstapelvorrichtung (100) nach Anspruch 2, wobei die anfängliche Position so ausgelegt ist, dass ein Boden des Batteriezellmoduls (200') in Kontakt mit einer oberen Oberfläche der Stapelplattform (2) ist.

4. Batteriemodulstapelvorrichtung (100) nach einem der Ansprüche 1 bis 3, ferner umfassend eine Versetzungsmessungskomponente (7), ausgelegt zum Messen einer Bewegungsstrecke der Stapelplattform (2) in der ersten Richtung (z).

5. Batteriemodulstapelvorrichtung (100) nach einem der Ansprüche 1 bis 4, wobei die Stapelplattform (2) Folgendes umfasst:
einen Verbindungsabschnitt (21); und
mehrere erste Vorsprünge (22), bereitgestellt an Intervallen in einer zweiten Richtung (x) über dem Verbindungsabschnitt (21), wobei eine erste Nut (225) zwischen zwei angrenzenden ersten Vorsprüngen (22) gebildet ist zur Entfernung des Batteriemoduls (200), wobei die mehreren ersten Vorsprünge (22) dazu ausgelegt sind, die Batteriezellmodule (200') gemeinsam zu tragen, und wobei die zweite Richtung (x) senkrecht zur ersten Richtung (z) ist;
und/oder
ferner umfassend die zu stapelnden Batteriezellmodule (200'), wobei die Batteriezellmodule (200') jeweils Folgendes umfassen: ein Wärmeableitungselement (201) und eine an dem Wärmeableitungselement (201) angeordnete Batteriezelle (202).

6. Batteriemodulstapelvorrichtung (100) nach einem der Ansprüche 1 bis 5, wobei die Stapelplattform (2) Folgendes umfasst:
einen ersten Begrenzungsabschnitt (221), ausgelegt zum Begrenzen der Bewegung der Batteriezellmodule (200') in einer zweiten Richtung (x), wobei die zweite Richtung (x) senkrecht zur ersten Richtung (z) ist und die gleiche ist wie eine Längenrichtung der Batteriezellmodule (200); und/oder
einen zweiten Begrenzungsabschnitt (222), ausgelegt zum Begrenzen der Bewegung der Batteriezellmodule (200') in einer dritten Richtung (y), wobei die dritte Richtung (y) senkrecht zur ersten Richtung (z) ist und die gleiche ist wie eine Breitenrichtung der Batteriezellmodule (200).

7. Batteriemodulstapelvorrichtung (100) nach Anspruch 6, wobei die Batteriezellmodule (200') jeweils ein Wärmeableitungselement (201) und eine an dem Wärmeableitungselement (201) angeordnete Batteriezelle (202) umfassen, wobei das Wärmeableitungselement (201) der untersten Schicht des Batteriezellmoduls (200') ein Aufnahmegehäuse (2011) umfasst, wobei mehrere zweite Vorsprünge (2012) auf einer Seite des Aufnahmegehäuses (2011) entfernt von der Batteriezelle (202) bereitgestellt sind, die bei Intervallen in der Längenrichtung des Batteriezellmoduls (200) bereitgestellt sind, und wobei einige der zweiten Vorsprünge (2012) mit zweiten Nuten (2013) versehen sind;
wobei der erste Begrenzungsabschnitt (221) dazu ausgelegt ist, mit der zweiten Nut (2013) zusammenzuwirken, um die Bewegung des Batteriezellmoduls (200') in der zweiten Richtung (x) zu begrenzen; und/oder wobei der zweite Begrenzungsabschnitt (222) dazu ausgelegt ist, ein Ende jedes der zweiten Vorsprünge (2012) in der dritten Richtung (y) zu begrenzen, um die Bewegung des Batteriezellmoduls (200') in der dritten Richtung (y) zu begrenzen.

8. Batteriemodulstapelvorrichtung (100) nach einem der Ansprüche 1 bis 7, die ferner Folgendes umfasst: eine Positionierungsplattform (4), ausgelegt zum Positionieren der zu stapelnden Batteriezellmodule (200'); wobei die Klemmvorrichtung (3) bewegbar angeordnet und ausgelegt ist zum Erhalten der Batteriezellmodule (200') von der Positionierungsplattform (4) und Platzieren der Batteriezellmodule auf der Stapelplattform (2).

9. Batteriemodulstapelvorrichtung (100) nach Anspruch 8, wobei sich die Positionierungsplattform (4) auf einer seitlichen Oberfläche der Stapelplattform (2) in einer zweiten Richtung (x) befindet, und wobei die Klemmvorrichtung (3) in der ersten Richtung (z) und/oder der zweiten Richtung (x) bewegbar angeordnet ist, wobei die zweite Richtung (x) senkrecht zur ersten Richtung (z) ist;
und/oder
wobei die Positionierungsplattform (4) Folgendes umfasst:
eine Trageplattform (41), ausgelegt zum Tragen der Batteriezellmodule (200'); und
zwei erste Klemmabschnitte (42), dazu ausgelegt, die Batteriezellmodule (200') in der zweiten Richtung (x) von zwei Seiten einzuklemmen und zu positionieren und einen einstellbaren Abstand in der zweiten Richtung (x) aufzuweisen, wobei die zweite Richtung (x) senkrecht zur ersten Richtung (z) ist;
und/oder
wobei die Positionierungsplattform (4) ferner Folgendes umfasst:
eine Trageplattform (41), ausgelegt zum Tragen der Batteriezellmodule (200');
einen ersten Positionierungsabschnitt (43), angeordnet auf der Trageplattform (41) und ausgelegt zum Positionieren einer seitlichen Oberfläche jedes Batteriezellmoduls (200'), die senkrecht zu einer dritten Richtung (y) und entfernt von einem Elektrodenableitungsabschnitt (2022) ist; und einen zweiten Positionierungsabschnitt (44), angeordnet auf der Trageplattform (41) und ausgelegt zum Positionieren einer seitlichen Oberfläche des Batteriezellmoduls (200'), die senkrecht zu der dritten Richtung (y) und entfernt von dem Elektrodenableitungsabschnitt (2022) ist;
wobei die dritte Richtung (y) senkrecht zur ersten Richtung (z) ist,
wobei vorzugsweise
die Batteriezellmodule (200') jeweils eine Batteriezelle (202) umfassen, der zweite Positionierungsabschnitt (44) zwei bewegbare Blöcke (441) umfasst und die zwei bewegbaren Blöcke (441) in der dritten Richtung (y) bewegbar angeordnet sind und dazu ausgelegt sind, die Batteriezelle (202) entsprechend in der dritten Richtung (y) zu positionieren.

10. Batteriemodulstapelvorrichtung (100) nach einem der Ansprüche 1 bis 9, die ferner Folgendes umfasst: einen Positionierungsmechanismus (5), der sich in der ersten Richtung (z) zwischen der Klemmvorrichtung (3) und den Stapelplattformen (2) befindet und ausgelegt ist zum Positionieren des momentan auf der obersten Schicht befindlichen Batteriezellmoduls (200'), wobei vorzugsweise
der Positionierungsmechanismus (5) Folgendes umfasst:
zwei zweite Klemmabschnitte (51), dazu ausgelegt, zwei Seiten des in einer zweiten Richtung (x) momentan auf der obersten Schicht befindlichen Batteriezellmoduls (200') einzuklemmen und zu positionieren, wobei ein Abstand zwischen den zwei zweiten Klemmabschnitten (51) in der zweiten Richtung (x) einstellbar ist und wobei die zweite Richtung (x) senkrecht zur ersten Richtung (z) ist;
wobei eher vorzuziehen
die Batteriezellmodule (200') jeweils eine Batteriezelle (202) umfassen, und wobei der Positionierungsmechanismus (5) ferner Folgendes umfasst:
zwei dritte Positionierungsabschnitte (52), die in einer dritten Richtung (y) entsprechend mit jeweiligen Enden der zwei zweiten Klemmabschnitte (51) verbunden sind, wobei die dritte Richtung (y) senkrecht zu der ersten Richtung (z) und der zweiten Richtung (x) ist, wobei die dritten Positionierungsabschnitte (52) in der dritten Richtung (y) bewegbar angeordnet sind, und wobei die dritten Positionierungsabschnitte (52) dazu ausgelegt sind, einen Elektrodenableitungsabschnitt (2022) der Batteriezelle (202) in der dritten Richtung (y) zu positionieren.

11. Batteriemodulstapelvorrichtung (100) nach einem der Ansprüche 1 bis 10, wobei die Klemmvorrichtung (3) Folgendes umfasst:
die Batteriezellmodule (200), die jeweils ein Wärmeableitungselement (201) und eine an dem Wärmeableitungselement (201) angeordnete Batteriezelle (202) umfassen, und wobei die Klemmvorrichtung (3) ferner Folgendes umfasst:
ein Druckanwendungselement (36), angeordnet zwischen den zwei dritten Klemmabschnitten (34) und ausgelegt zum Anwenden einer Druckkraft auf eine oberste Oberfläche der Batteriezelle (202);
und/oder
wobei ein voreingestellter Winkel (a) zwischen einer Trageoberfläche (S) der Stapelplattform (2) und einer horizontalen Ebene gebildet wird,
wobei vorzugsweise
der Halter (1) einen Montageabschnitt (11) und einen Stützabschnitt (12) umfasst, der Stützabschnitt (12) an einem Seitenabschnitt des Montageabschnitts (11) angeordnet ist, die Stapelplattform (2) in der ersten Richtung (z) bewegbar am Stützabschnitt (12) montiert ist, der Stützabschnitt (12) eine Stützoberfläche (121) aufweist und sich auf einer unteren Seite der Stapelplattform (2) befindet und die Stützoberfläche (121) senkrecht zur Trageoberfläche (S) der Stapelplattform (2) ist.

12. Batteriemodulstapelvorrichtung (100) nach einem der Ansprüche 1 bis 11, ferner umfassend eine am Halter (1) angeordnete Kippschutzvorrichtung (6), wobei die Kippschutzvorrichtung (6) eine bewegbare Komponente (61) umfasst, die in einer zweiten Richtung (x) bewegbar ist und dazu ausgelegt ist, während des Stapelns eine erste voreingestellte Lücke zu einer Seitenoberfläche jedes der Batteriezellmodule (200') senkrecht zur zweiten Richtung (x) aufrechtzuerhalten und sich, nachdem alle Batteriezellmodule (200') gestapelt sind, wegzubewegen, um das Batteriemodul (200) zu entfernen.

13. Batteriemodulstapelvorrichtung (100) nach Anspruch 12, wobei die Kippschutzvorrichtung (6) ferner Folgendes umfasst:
ein Montageelement (62), angeordnet auf einer Außenseite der bewegbaren Komponente (61) in der zweiten Richtung (x); und
eine erste Antriebskomponente (63), angeordnet auf einer Seite des Montageelements (62) entfernt von der bewegbaren Komponente (61) und ausgelegt zum Antreiben der bewegbaren Komponente (61), um sich in der zweiten Richtung (x) relativ zum Montageelement (62) zu bewegen;
und/oder
wobei die bewegbare Komponente (61) in einer dritten Richtung (y) bewegbar ist und dazu ausgelegt ist, während des Stapelns eine zweite voreingestellte Lücke zu einer äußeren Seitenoberfläche des Batteriezellmoduls (200') senkrecht zur dritten Richtung (y) aufrechtzuerhalten und sich, nachdem alle Batteriezellmodule (200') gestapelt sind, wegzubewegen, um das Batteriemodul (200) zu entfernen,
wobei vorzugsweise
die Kippschutzvorrichtung (6) ferner Folgendes umfasst:
ein Montageelement (62), angeordnet auf einer Außenseite der bewegbaren Komponente (61) in der zweiten Richtung (x); und
eine zweite Antriebskomponente (64), die fest am Halter (1) montiert und dazu ausgelegt ist, das Montageelement (62) und die bewegbare Komponente (61) anzutreiben, um sich in der dritten Richtung (y) zu bewegen.

14. Batterieherstellungssystem, umfassend eine Batteriemodulstapelvorrichtung (100) nach einem der Ansprüche 1 bis 13.

15. Batteriemodulstapelverfahren, wobei das Verfahren die Batteriemodulstapelvorrichtung nach Anspruch 1 verwendet, wobei ein Batteriemodul (200) mehrere Batteriezellmodule (200') umfasst, die Seite an Seite in einer ersten Richtung (z) angeordnet sind, wobei das Verfahren Folgendes umfasst:
Einklemmen, durch eine am Halter (1) angeordnete Klemmvorrichtung (3), der zu stapelnden Batteriezellmodule (200');
Bewegen einer am Halter (1) angeordneten Stapelplattform (2) in der ersten Richtung (z) zu einer korrekten Position; und
Veranlassen der Klemmvorrichtung (3), die Batteriezellmodule (200') von über der Stapelplattform (2) auf der Stapelplattform (2) zu platzieren;
vorzugsweise ferner Folgendes umfassend:
Bringen der Stapelplattform (2) in eine anfängliche Position, wenn die unterste Schicht des Batteriezellmoduls (200') platziert wird; und
Bewegen, beim Platzieren der i-ten Schicht des Batteriezellmoduls (200') von der untersten Schicht, der Stapelplattform (2) um eine voreingestellte Strecke relativ zu der Position nach unten, wo die (i-1)-te Schicht des Batteriezellmoduls (200') platziert ist, wobei die voreingestellte Strecke die Dicke des Batteriezellmoduls (200') in der ersten Richtung (z) ist, wobei i = 2, 3, 4 ....
und/oder
wobei die Batteriezellmodule (200') jeweils ein Wärmeableitungselement (201) und eine an dem Wärmeableitungselement (201) angeordnete Batteriezelle (202) umfassen, und wobei, während des Stapelns angrenzender Batteriezellmodule (200'), die entsprechenden Wärmeableitungselemente (201) der angrenzenden Batteriezellmodule (200') miteinander zusammenwirken,
und/oder
ferner Folgendes umfassend:
vor dem Einklemmen der Batteriezellmodule (200') durch die Klemmvorrichtung (3), Platzieren der zu stapelnden Batteriezellmodule (200') auf einer Positionierungsplattform (4);
Positionieren der Batteriezellmodule (200') durch die Positionierungsplattform (4); und
Bewegen der Klemmvorrichtung (3) über die Positionierungsplattform (4) und Erhalten der Batteriezellmodule (200') von der Positionierungsplattform (4),
und/oder
ferner Folgendes umfassend:
vor dem Platzieren der i-ten Schicht des Batteriezellmoduls (200') von der untersten Schicht auf der Stapelplattform (2), Positionieren, durch einen am Halter (1) angeordneten Positionierungsmechanismus (5), der (i-1)-ten Schicht des Batteriezellmoduls (200'), wobei i = 2, 3, 4 ...; und
nachdem die i-te Schicht des Batteriezellmoduls (200') auf der Stapelplattform (2) platziert ist, Trennen des Positionierungsmechanismus (5) von der (i-1)-ten Schicht des Batteriezellmoduls (200').

## Revendications

1. Dispositif d'empilement de modules de batterie (100), dans lequel un module de batterie (200) comprend une pluralité de modules de cellule de batterie (200') agencés côte à côte dans une première direction (z), le dispositif d'empilement de modules de batterie (100) comprenant :
un support (1) ;
une plateforme d'empilement (2) agencée de manière mobile au niveau du support (1) dans la première direction (z) ; et
un dispositif de serrage (3) agencé au niveau du support (1) et configuré pour serrer les modules de cellule de batterie (200') à empiler et pour placer les modules de cellule de batterie (200') sur la plateforme d'empilement (2) depuis le dessus de la plateforme d'empilement (2) ; dans lequel le dispositif de serrage (3) comprend :
deux troisièmes parties de serrage (34) configurées pour serrer les modules de cellule de batterie (200') à empiler, et pour avoir une distance réglable dans une seconde direction (x), la seconde direction (x) étant perpendiculaire à la première direction (z) ; et
un élément d'aspiration de pression négative (35) agencé entre les deux troisièmes parties de serrage (34) et configuré pour aspirer une surface supérieure de chacun des modules de cellule de batterie (200') depuis une partie supérieure du module de cellule de batterie (200').

2. Dispositif d'empilement de modules de batterie (100) selon la revendication 1, dans lequel la plateforme d'empilement (2) est configurée pour être dans une position initiale lors du placement de la couche de module de cellule de batterie (200') la plus basse, et pour se déplacer vers le bas d'une distance prédéfinie par rapport à la position où la (i-1)^{e} couche de module de cellule de batterie (200') est placée lors du placement de la i^{e} couche de module de cellule de batterie (200') depuis la couche la plus basse, et la distance prédéfinie est l'épaisseur du module de cellule de batterie (200') dans la première direction (z), où i = 2, 3, 4...

3. Dispositif d'empilement de modules de batterie (100) selon la revendication 2, dans lequel la position initiale est configurée de telle sorte qu'une partie inférieure du module de cellule de batterie (200') est en contact avec une surface supérieure de la plateforme d'empilement (2).

4. Dispositif d'empilement de modules de batterie (100) selon l'une quelconque des revendications 1 à 3, comprenant en outre un composant de mesure de déplacement (7) configuré pour mesurer une distance de mouvement de la plateforme d'empilement (2) dans la première direction (z).

5. Dispositif d'empilement de modules de batterie (100) selon l'une quelconque des revendications 1 à 4, dans lequel la plateforme d'empilement (2) comprend :
une partie de liaison (21) ; et
une pluralité de premières parties saillantes (22) fournies à des intervalles dans une seconde direction (x) au-dessus de la partie de liaison (21), dans lequel une première rainure (225) est formée entre deux premières parties saillantes (22) adjacentes pour le retrait du module de batterie (200), la pluralité de premières parties saillantes (22) sont configurées pour porter conjointement les modules de cellule de batterie (200'), et la seconde direction (x) est perpendiculaire à la première direction (z) ;
et/ou
comprenant en outre les modules de cellule de batterie (200') à empiler, dans lequel les modules de cellule de batterie (200') comprennent chacun ; un élément de dissipation de chaleur (201) et une cellule de batterie (202) agencée au niveau de l'élément de dissipation de chaleur (201).

6. Dispositif d'empilement de modules de batterie (100) selon l'une quelconque des revendications 1 à 5, dans lequel la plateforme d'empilement (2) comprend :
une première partie de limitation (221) configurée pour limiter le mouvement des modules de cellule de batterie (200') dans une seconde direction (x), la seconde direction (x) étant perpendiculaire à la première direction (z) et étant la même qu'une direction de longueur des modules de cellule de batterie (200') ; et/ou
une seconde partie de limitation (222) configurée pour limiter le mouvement des modules de cellule de batterie (200') dans une troisième direction (y), la troisième direction (y) étant perpendiculaire à la première direction (z) et étant la même qu'une direction de largueur des modules de cellule de batterie (200').

7. Dispositif d'empilement de modules de batterie (100) selon la revendication 6, dans lequel les modules de cellule de batterie (200') comprennent chacun un élément de dissipation de chaleur (201) et une cellule de batterie (202) agencée au niveau de l'élément de dissipation de chaleur (201), l'élément de dissipation de chaleur (201) de la couche de module de cellule de batterie (200') la plus basse comprend une enveloppe de logement (2011), une pluralité de secondes parties saillantes (2012) sont fournies sur un côté de l'enveloppe de logement (2011) à l'écart de la cellule de batterie (202), qui sont fournies à des intervalles dans la direction de longueur du module de cellule de batterie (200'), et certaines des secondes parties saillantes (2012) sont pourvues de secondes rainures (2013) ;
dans lequel la première partie de limitation (221) est configurée pour coopérer avec la seconde rainure (2013) pour limiter le mouvement du module de cellule de batterie (200') dans la seconde direction (x) ; et/ou la seconde partie de limitation (222) est configurée pour limiter une extrémité de chacune des secondes parties saillantes (2012) dans la troisième direction (y) pour limiter le mouvement du module de cellule de batterie (200') dans la troisième direction (y).

8. Dispositif d'empilement de modules de batterie (100) selon l'une quelconque des revendications 1 à 7, comprenant en outre : une plateforme de positionnement (4) configurée pour positionner les modules de cellule de batterie (200') à empiler ; dans lequel le dispositif de serrage (3) est agencé de manière mobile et configuré pour obtenir les modules de cellule de batterie (200') depuis la plateforme de positionnement (4) et placer les modules de cellule de batterie sur la plateforme d'empilement (2).

9. Dispositif d'empilement de modules de batterie (100) selon la revendication 8, dans lequel la plateforme de positionnement (4) est située sur une surface latérale de la plateforme d'empilement (2) dans une seconde direction (x), et le dispositif de serrage (3) est agencé de manière mobile dans la première direction (z) et/ou la seconde direction (x), la seconde direction (x) étant perpendiculaire à la première direction (z) ;
et/ou
dans lequel la plateforme de positionnement (4) comprend :
une plateforme de portage (41) configurée pour porter les modules de cellule de batterie (200') ; et
deux premières parties de serrage (42) configurées pour serrer et positionner deux côtés des modules de cellule de batterie (200') dans la seconde direction (x), et pour avoir une distance réglable dans la seconde direction (x), la seconde direction (x) étant perpendiculaire à la première direction (z) ;
et/ou
dans lequel la plateforme de positionnement (4) comprend en outre :
une plateforme de portage (41) configurée pour porter les modules de cellule de batterie (200') ; une première partie de positionnement (43) agencée sur la plateforme de portage (41) et configurée pour positionner une surface latérale de chaque module de cellule de batterie (200') qui est perpendiculaire à une troisième direction (y) et à l'écart d'une partie de sortie d'électrode (2022) ; et
une seconde partie de positionnement (44) agencée sur la plateforme de portage (41) et configurée pour positionner une surface latérale du module de cellule de batterie (200') qui est perpendiculaire à la troisième direction (y) et à l'écart de la partie de sortie d'électrode (2022) ;
dans lequel la troisième direction (y) est perpendiculaire à la première direction (z),
de préférence,
les modules de cellule de batterie (200') comprennent chacun une cellule de batterie (202), la seconde partie de positionnement (44) comprend deux blocs mobiles (441), et les deux blocs mobiles (441) sont agencés de manière mobile dans la troisième direction (y), et sont configurés pour positionner respectivement la cellule de batterie (202) dans la troisième direction (y).

10. Dispositif d'empilement de modules de batterie (100) selon l'une quelconque des revendications 1 à 9, comprenant en outre : un mécanisme de positionnement (5) situé entre le dispositif de serrage (3) et les plateformes d'empilement (2) dans la première direction (z) et configuré pour positionner le module de cellule de batterie (200') actuellement situé sur la couche supérieure ;
de préférence,
le mécanisme de positionnement (5) comprend :
deux secondes parties de serrage (51) configurées pour serrer et positionner deux côtés du module de cellule de batterie (200') actuellement situé sur la couche la plus haute dans une seconde direction (x), dans lequel une distance entre les deux secondes parties de serrage (51) est réglable dans la seconde direction (x), et la seconde direction (x) est perpendiculaire à la première direction (z) ;
plus préférablement,
les modules de cellule de batterie (200') comprennent chacun une cellule de batterie (202), et le mécanisme de positionnement (5) comprend en outre :
deux troisièmes parties de positionnement (52) reliées respectivement à des extrémités respectives des deux secondes parties de serrage (51) dans une troisième direction (y), la troisième direction (y) étant perpendiculaire à la première direction (z) et à la seconde direction (x), dans lequel les troisièmes parties de serrage (52) sont agencées de manière mobile dans la troisième direction (y), et les troisièmes parties de serrage (52) sont configurées pour positionner une partie de sortie d'électrode (2022) de la cellule de batterie (202) dans la troisième direction (y).

11. Dispositif d'empilement de modules de batterie (100) selon l'une quelconque des revendications 1 à 10, dans lequel le dispositif de serrage (3) comprend :
les modules de cellule de batterie (200') comprenant chacun un élément de dissipation de chaleur (201) et une cellule de batterie (202) agencée au niveau de l'élément de dissipation de chaleur (201), et le dispositif de serrage (3) comprend en outre :
un élément d'application de pression (36) agencé entre les deux troisièmes parties de serrage (34) et configuré pour appliquer une force de pression à une surface supérieure de la cellule de batterie (202) ;
et/ou
dans lequel un angle prédéfini (a) est formé entre une surface de portage (S) de la plateforme d'empilement (2) et un plan horizontal,
de préférence,
le support (1) comprend une partie de montage (11) et une partie de support (12), la partie de support (12) est agencée au niveau d'une partie latérale de la partie de montage (11), la plateforme d'empilement (2) est montée de manière mobile sur la partie de support (12) dans la première direction (z), la partie de support (12) a une surface de support (121) et est située sur un côté inférieur de la plateforme d'empilement (2), et la surface de support (121) est perpendiculaire à la surface de portage (S) de la plateforme d'empilement (2).

12. Dispositif d'empilement de modules de batterie (100) selon l'une quelconque des revendications 1 à 11, comprenant en outre un dispositif antibasculement (6) agencé sur le support (1), dans lequel le dispositif antibasculement (6) comprend un composant mobile (61) mobile dans une seconde direction (x), et est configuré pour maintenir un premier écartement prédéfini avec une surface latérale de chacun des modules de cellule de batterie (200') perpendiculaire à la seconde direction (x) pendant l'empilement, et pour s'éloigner pour retirer le module de batterie (200) après que tous les modules de cellule de batterie (200') sont empilés.

13. Dispositif d'empilement de modules de batterie (100) selon la revendication 12, dans lequel le dispositif antibasculement (6) comprend en outre :
un élément de montage (62) agencé sur un côté externe du composant mobile (61) dans la seconde direction (x) ; et
un premier composant d'entraînement (63) agencé sur un côté de l'élément de montage (62) à l'écart du composant mobile (61), et configuré pour entraîner le composant mobile (61) en déplacement par rapport à l'élément de montage (62) dans la seconde direction (x) ;
et/ou
le composant mobile (61) est mobile dans une troisième direction (y) et est configuré pour maintenir un second écartement prédéfini avec une surface latérale externe du module de cellule de batterie (200') perpendiculaire à la troisième direction (y) pendant l'empilement, et pour s'éloigner pour retirer le module de batterie (200) après que tous les modules de cellule de batterie (200') sont empilés,
de préférence,
le dispositif antibasculement (6) comprend en outre :
un élément de montage (62) agencé sur un côté externe du composant mobile (61) dans la seconde direction (x) ; et
un second composant d'entraînement (64) monté de manière fixe sur le support (1) et configuré pour entraîner l'élément de montage (62) et le composant mobile (61) en déplacement dans la troisième direction (y).

14. Système de production de batterie comprenant un dispositif d'empilement de modules de batterie (100) selon l'une quelconque des revendications 1 à 13.

15. Procédé d'empilement de modules de batterie, le procédé utilisant le dispositif d'empilement de modules de batterie selon la revendication 1, dans lequel un module de batterie (200) comprend une pluralité de modules de cellule de batterie (200') agencés côté à côté dans une première direction (z), le procédé d'empilement de modules de batterie comprenant :
le serrage, par un dispositif de serrage (3) agencé au niveau d'un support (1), des modules de cellule de batterie (200') à empiler ;
le déplacement d'une plateforme d'empilement (2) agencée au niveau du support (1) vers une position appropriée dans la première direction (z) ; et
le fait d'amener le dispositif de serrage (3) à placer les modules de cellule de batterie (200') sur la plateforme d'empilement (2) depuis le dessus de la plateforme d'empilement (2) ; de préférence,
comprenant en outre :
le fait d'amener la plateforme d'empilement (2) dans une position initiale lors du placement de la couche de module de cellule de batterie (200') la plus basse ; et
le déplacement de la plateforme d'empilement (2) vers le bas d'une distance prédéfinie par rapport à la position où la (i-1)^{e} couche de module de cellule de batterie (200') est placée lors du placement de la i^{e} couche de module de cellule de batterie (200') depuis la couche la plus basse, dans lequel la distance prédéfinie est l'épaisseur du module de cellule de batterie (200') dans la première direction (z) ; et i = 2, 3, 4...,
et/ou
les modules de cellule de batterie (200') comprennent chacun un élément de dissipation de chaleur (201) et une cellule de batterie (202) agencée au niveau de l'élément de dissipation de chaleur (201) ; et pendant l'empilement de modules de cellule de batterie (200') adjacents, les éléments de dissipation de chaleur (201) respectifs des modules de cellule de batterie (200') adjacents coopèrent l'un avec l'autre,
et/ou
comprenant en outre :
avant le serrage des modules de cellule de batterie (200') par le dispositif de serrage (3), le placement des modules de cellule de batterie (200') à empiler sur une plateforme de positionnement (4) ;
le positionnement des modules de cellule de batterie (200') par la plateforme de positionnement (4) ; et
le déplacement du dispositif de serrage (3) au-dessus de la plateforme de positionnement (4), et l'obtention des modules de cellule de batterie (200') à partir de la plateforme de positionnement (4), et/ou
comprenant en outre :
avant le placement de la i^{e} couche de module de cellule de batterie (200') à partir de la couche la plus basse sur la plateforme d'empilement (2), le positionnement, par un mécanisme de positionnement (5) agencé au niveau du support (1), de la (i-1)^{e} couche de module de cellule de batterie (200'), où i = 2, 3, 4... ; et
après que la i^{e} couche de module de cellule de batterie (200') est placée sur la plateforme d'empilement (2), la séparation du mécanisme de positionnement (5) de la (i-1)^{e} couche de module de cellule de batterie (200').
